# EUROPÄISCHE PATENTSCHRIFT

(11) **EP 3 463 834 B1**
(45) Veröffentlichungstag und Bekanntmachung des Hinweises auf die Patenterteilung: **19.10.2022**
(21) Anmeldenummer: 17727108.7
(22) Anmeldetag: 19.05.2017
(51) Int. Cl.: B29D 11/00, B24B 13/00

(54) **VERFAHREN UND SYSTEM ZUR BEARBEITUNG OPTISCHER LINSEN**
METHOD AND SYSTEM FOR PROCESSING OPTICAL LENSES
PROCÉDÉ ET SYSTÈME POUR TRAITER DES LENTILLES OPTIQUES

(30) Priorität: 25.05.2016 DE 102016006239; 28.06.2016 DE 102016007837
(43) Veröffentlichungstag der Anmeldung: 10.04.2019
(73) Patentinhaber: Schneider GmbH & Co. KG, 35112 Fronhausen (DE)
(72) Erfinder: SCHNEIDER, Gunter, 35037 Marburg (DE); HUTTENHUIS, Stephan, 35096 Niederweimar (DE)
(74) Vertreter: Von Rohr Patentanwälte Partnerschaft mbB
(86) Internationale Anmeldenummer: PCT/EP2017/025139
(87) Internationale Veröffentlichungsnummer: WO 2017/202502

(56) Entgegenhaltungen:
- WO-A2-2013/131656
- DE-T2- 60 207 588
- US-A1- 2012 209 416
- US-A1- 2014 228 995
- Kevin Cross: "WHERE IS AUTOMATION TAKING THE 21ST-CENTURY LAB?", , 1. September 2015 (2015-09-01), Seiten 1-5, XP002772552, Gefunden im Internet: URL:http://www.opticallabproducts.com/OLP/ OLP-Archives/WHERE-IS-AUTOMATION-TAKING-TH E-21STCENTURY-LAB-5295.aspx [gefunden am 2017-07-25]
- "Modulo Line, Automated lens processing, intelligently combined", INTERNET CITATION, 5. Juni 2014 (2014-06-05), Seiten 1-4, XP002766329, Gefunden im Internet: URL:http://www.schneider-om.com/fileadmin/ schneider-om/pdf/Modulo_Line__06-2014__web .pdf [gefunden am 2017-01-19]

## Beschreibung

Die vorliegende Erfindung betrifft ein Verfahren zur Bearbeitung optischer Linsen gemäß dem Oberbegriff des Anspruchs 1 sowie ein System zur Bearbeitung optischer Linsen gemäß dem Oberbegriff des Anspruchs 8.

Die Bearbeitung von optischen Linsen, insbesondere Brillengläsern, erfolgt in mehreren Schritten bzw. in mehreren separaten Bearbeitungseinrichtungen. Die Bearbeitung kann insbesondere ein Blocken, Fügen oder sonstiges (temporäres) Verbinden, wie Kleben mit Klebeband, ein Verzögern, Zwischenspeichern oder Sortieren bzw. Stacken, ein formgebendes oder spanendes Bearbeiten, ein Polieren, ein Prüfen bzw. Messen, ein Markieren, ein Beschichten und/oder ein Reinigen umfassen.

Die vorliegende Erfindung betrifft insbesondere ein System mit mehreren Bearbeitungseinrichtungen und/oder mit mindestens einer Bearbeitungslinie zur Bearbeitung von optischen Linsen, besonders bevorzugt Brillengläsern. Das System bzw. die Bearbeitungslinie umfasst mehrere, insbesondere (weitgehend) unabhängig arbeitende Bearbeitungseinrichtungen. Besonders bevorzugt umfasst das System bzw. die Bearbeitungslinie (auch) mehrere Bearbeitungseinrichtungen für die gleiche Bearbeitung, um beispielsweise den Durchsatz zu erhöhen. Bedarfsweise umfasst das System mehrere, insbesondere unabhängig voneinander arbeitende Bearbeitungslinien und besonders bevorzugt ein Transfersystem bzw. Transportsystem, um die Linsen den Bearbeitungseinrichtungen bzw. Bearbeitungslinien wahlweise zuzufördern.

Eine "Bearbeitungseinrichtung" im Sinne der vorliegenden Erfindung ist vorzugsweise eine Maschine bzw. eine ohne weitere Komponenten funktionsfähige Baugruppe. Vorzugsweise ist eine Bearbeitungseinrichtung autark bzw. kann die Bearbeitungseinrichtung selbstständig Bearbeitungen von Linsen durchführen. Besonders bevorzugt ist eine Bearbeitungseinrichtung als eigenständiges Modul ausgebildet, so dass ein System oder eine Anlage mehrere solche modularen Bearbeitungseinrichtungen aufweisen oder aus diesen aufgebaut bzw. zusammengesetzt werden kann. So ist das System bzw. die Anlage individuell an durchzuführende Arbeitsschritte, eine Anzahl an (pro Zeiteinheit) zu bearbeitenden Linsen und/oder finanzielle und/oder räumliche Anforderungen oder Möglichkeiten eines Betreibers der Anlage bzw. des Systems anpassbar bzw. individualisierbar.

Die WO 2013/131656 A2, die den Ausgangspunkt der vorliegenden Erfindung bildet, offenbart ein System und ein Verfahren zum Bearbeiten optischer Linsen, wobei Linsen oder Linsenträger mit Linsen unabhängig arbeitenden Bearbeitungseinrichtungen wahlweise zugefördert werden, die eine Bearbeitungslinie bilden. Aufträge mit zu bearbeitenden Linsen, Bearbeitungsplänen, Statusinformationen, Prozessdaten und dergleichen werden von einer zentralen Systemsteuerung verwaltet und bedarfsweise angezeigt. Die Zuförderung von Linsen wahlweise zu verschiedenen Bearbeitungseinrichtungen und in beliebigen Reihenfolgen zusammen mit den unabhängig bearbeitenden Bearbeitungseinrichtungen, die selbstständig Aufträge anfordern und sich zufördern lassen können, gestattet eine wesentlich flexiblere Bearbeitung und insbesondere auch eine wesentlich einfachere Ergänzung bestehender Anlagen als frühere Bearbeitungslinien. Generell ist eine weitergehende Optimierung des Einsatzes der Bearbeitungseinrichtungen schwierig, aber wünschenswert.

Die DE 602 07 588 T2 betrifft generell das Gebiet der Herstellung von Halbleitervorrichtungen und offenbart ein Verfahren zur Zustandsschätzung und Einteilung für ein Herstellsystem. Das Herstellsystem weist mehrere Werkzeuge auf, die mit einem Netzwerk verbunden werden können, wobei die Werkzeuge in Sätze gleicher Werkzeuge gruppiert sind. Ein Controller des Herstellsystems weist eine Steuerfunktionskomponente und eine Beobachterkomponente auf, wobei die Beobachterkomponente die Zustände des Herstellsystems schätzt und aktualisiert und die Steuerfunktionskomponente diese Zustandsinformationen zum Festlegen der Betriebsanweisungs-Parameter für die Werkzeuge nutzt. Das Schätzen der Zustände erfolgt auf Grundlage eines statistischen mathematischen Modells bzw. eines Schätzalgorithmus, ähnlich einem Kalman-Filter. Ein Planungs-Controller implementiert ein Planungsmodell, in dem sicher gestellt werden kann, dass die Werkzeuge auf effiziente Weise ausgelastet werden. Der Planungs-Controller besitzt Informationen, aufgrund derer er weiß, wann die geschätzten Parameter für einen Werkzeugzustand eine signifikante Unsicherheit aufweisen. Dies ist ein guter Zeitraum zum Durchführen von Wartungsarbeiten an dem Werkzeug, da die an die Wartung anschließende Qualifizierung neue Informationen über den Zustand der Werkzeugparameter liefert. Durch diese Vorgehensweise kann durch Einplanen von Ereignissen zu einem Zeitraum, zu dem diese wirklich erforderlich sind, die Stillstandszeit reduziert werden.

Zu dem obigen Herstellsystem bzw. Verfahren sind jedoch keine optimierten Abläufe unter der Berücksichtigung von anstehenden Instandhaltungen und dadurch bedingten Ausfallzeiten offenbart.

Kevin Cross: "Where is automation taking the 21st-Century lab?" in Optical Lab Products, September 2015, betrifft eine Anlage zur Bearbeitung optischer Linsen. Die Anlage kann ein zentrales Dashboard-Management-System zur Anzeige von Betriebsdaten auf einem einzigen Bildschirm aufweisen. Ferner kann das Dashboard-Management-System präventive Instandhaltungsaufgaben auf einer täglichen Basis identifizieren. Einem Labor-Management-Team wird es so möglich, entsprechende Instandhaltungen während einer geeigneten Tageszeit einzuplanen.

Die US 2012/0209416 A1 betrifft ein System zum Zuführen von Brillengläsern zu einer Vielzahl von Bearbeitungsvorrichtungen für die Randbearbeitung der Brillengläser. Das System weist Förderbänder auf, von denen Brillenglasbehälter abgezweigt und in Standby-Positionen bewegt werden können, um anschließend Brillengläser zur Bearbeitung einer Bearbeitungsvorrichtung zuführen oder bearbeitete Brillengläser aufnehmen zu können.

Die US 2014 /0228995 A1 betrifft ein System und ein Verfahren zur Bearbeitung von Brillengläsern. Nach einer ersten Bearbeitung werden Korrekturdaten auf Basis der Bearbeitungsdaten bestimmt und eine zweite Bearbeitung mit den Korrekturdaten durchgeführt.

Der vorliegenden Erfindung liegt die Aufgabe zugrunde, ein Verfahren und ein System zur Bearbeitung optischer Linsen anzugeben, wobei eine effiziente Bearbeitung insbesondere auch unter Berücksichtigung aktueller Bedingungen mit sehr guter Bearbeitungsqualität ermöglicht wird.

Die obige Aufgabe wird durch ein Verfahren gemäß Anspruch 1 oder durch ein System gemäß Anspruch 8 gelöst. Vorteilhafte Weiterbildungen sind Gegenstand der Unteransprüche.

Gemäß einem Aspekt der vorliegenden Erfindung werden die Linsen von verschiedenen Bearbeitungseinrichtungen oder Bearbeitungslinien mit mehreren Bearbeitungseinrichtungen entsprechend einer Zuordnung bearbeitet. Eine entsprechende Zuförderung erfolgt insbesondere mittels eines Transfer- bzw. Transportsystems. Die Zuordnung wird vorzugsweise von einer insbesondere zentralen Systemsteuerung, alternativ oder zusätzlich von einer Bearbeitungslinie unter Berücksichtigung anstehender oder zu erwartender Instandhaltungen der Bearbeitungseinrichtungen bzw. damit verbundener Ausfallzeiten festgelegt oder geändert.

Die vorliegende Erfindung ermöglicht insbesondere eine Optimierung der Auslastung und/oder Sicherung einer hohen Bearbeitungsqualität durch Berücksichtigung bzw. Planung und insbesondere Steuerung der Instandhaltung.

Unter "Instandhaltung" ist bzw. sind erfindungsgemäß vorzugsweise die Wartung, die Inspektion, die Instandsetzung bzw. Reparatur und/oder die Verbesserung von Bearbeitungseinrichtungen zu verstehen.

Der Begriff "Instandhaltung" wird nachfolgend bzw. erfindungsgemäß vorzugsweise synonym für die genannten Instandhaltungsmaßnahmen (Wartung, Inspektion, Instandsetzung, Reparatur und/oder Verbesserung) verwendet bzw. soll vorzugsweise in diesem Sinne verstanden werden.

Insbesondere wird eine präventive oder geplante Instandhaltung ermöglicht oder realisiert.

Besonders bevorzugt wird eine Instandhaltung für eine Bearbeitungseinrichtung geplant oder durchgeführt, wenn der Auftragsbestand oder die Auslastung gering ist, wenn die für die Instandhaltung erforderlichen Mittel verfügbar sind, wenn eine andere Bearbeitungslinie oder Bearbeitungseinrichtung für die gleiche Bearbeitung verfügbar ist und/oder wenn ein weiterer Aufschub der Instandhaltung nicht möglich ist. Dies ist einer effizienten Bearbeitung und/oder hohen Bearbeitungsqualität und/oder hohen Verfügbarkeit des Systems zuträglich.

Besonders bevorzugt wird eine geplante oder zu erwartende Instandhaltung vorgezogen, wenn der Auftragsbestand oder die Auslastung niedrig ist und/oder eine andere Bearbeitungslinie oder Bearbeitungseinrichtung für die gleiche Bearbeitung verfügbar ist. Dies ist einer effizienten Bearbeitung und/oder hohen Bearbeitungsqualität und/oder hohen Verfügbarkeit des Systems zuträglich.

Vorzugsweise erfolgt eine zentrale Verwaltung bzw. Serviceanzeige, die anstehende oder zu erwartende und/oder durchgeführte Instandhaltungen bzw. damit verbundene Ausfallzeiten der einzelnen Bearbeitungseinrichtungen plant, ausgibt, protokolliert, anzeigt und/oder speichert bzw. archiviert.

Besonders bevorzugt erfolgt eine zentrale Erfassung, Verwaltung, Festlegung und/oder Planung der Instandhaltungen der einzelnen Bearbeitungseinrichtungen, besonders bevorzugt mittels der (zentralen) Systemsteuerung oder einer sonstigen Steuerung. Dies ist einer effizienten Bearbeitung und/oder hohen Bearbeitungsqualität und/oder hohen Verfügbarkeit des Systems zuträglich.

Vorzugsweise wird eine Bearbeitungseinrichtung bzw. Bearbeitungslinie, für die eine Instandhaltung ansteht, insbesondere bereits fest geplant ist, oder durchgeführt wird, nicht mehr für weitere Bearbeitungen zugeordnet oder nur noch für untergeordnete Bearbeitungen oder für Bearbeitungen mit geringeren Qualitätsanforderungen zugeordnet bzw. für Zuordnungen von Linsen (temporär) gesperrt.

Erfindungsgemäß erfolgt eine zentrale Verwaltung von Anweisungen zur Instandhaltung der einzelnen Bearbeitungseinrichtungen, wobei die jeweiligen Anweisungen dezentral an die jeweiligen Bearbeitungseinrichtungen ausgegeben werden oder ausgebbar sind. Die Anweisungen umfassen insbesondere schriftliche Anleitungen und zeichnerische Darstellungen und/oder Animationen oder Filme, die am Bildschirm der jeweiligen Bearbeitungseinrichtung und/oder an einem mobilen Bildschirm, wie einem Smartphone, Laptop oder dergleichen, vor Ort an der jeweiligen Bearbeitungseinrichtung ausgebbar, insbesondere anzeigbar, sind. Besonders bevorzugt steuert die Systemsteuerung selbsttätig, welche Anweisungen unter Berücksichtigung der jeweiligen Bearbeitungseinrichtung und der geplanten oder erforderlichen Instandhaltung ausgegeben werden bzw. anzeigbar sind.

Die Ausgabe von Anweisungen zur Instandhaltung an den einzelnen, instand zu haltenden Bearbeitungseinrichtungen ermöglicht es einem Techniker, sehr effizient eine Instandhaltung an der Bearbeitungseinrichtung durchzuführen. Vorzugsweise ist dabei auch ein Austausch bzw. Chat des jeweiligen Technikers mit einem Serviceleiter oder beispielsweise sogar einem Techniker des Herstellers der Bearbeitungseinrichtung und/oder einem Expertensystem möglich.

Zur Erleichterung des Austauschs des jeweiligen Technikers mit einem Serviceleiter oder beispielsweise einem Techniker des Herstellers wird besonders bevorzugt eine Datenbrille oder Kamera, also insbesondere eine Brille mit integrierter Kamera, eingesetzt, so dass eine wesentlich bessere Anleitung des Technikers vor Ort ermöglicht wird. Beispielsweise kann nämlich ein entfernter Serviceleiter oder ein Techniker des Herstellers die Situation vor Ort an der instand zu setzenden Bearbeitungseinrichtung - vorzugsweise mit der Blickrichtung des Technikers vor Ort - visuell über die Datenbrille bzw. Kamera übertragen bekommen und dementsprechend den Techniker vor Ort optimal unterstützen bzw. anleiten. Diese visuelle Unterstützung ist vorzugsweise auch unabhängig von der zentralen Steuerung bzw. Verwaltung und/oder einer Einbindung der Bearbeitungseinrichtung in eine Bearbeitungslinie realisierbar.

Besonders bevorzugt muss ein Techniker, der eine Instandhaltung an einer Bearbeitungseinrichtung durchführen möchte, zunächst sich identifizieren und/oder eine Freischaltung der Bearbeitungseinrichtung bewirken. Dies erfolgt insbesondere unter Einbindung bzw. Protokollierung bei der vorzugsweise zentralen Systemsteuerung o. dgl.

Besonders bevorzugt muss ein Techniker auch durchgeführte Instandhaltungsmaßnahmen eingeben oder bestätigen. Dies wird vorzugsweise von der insbesondere zentralen Systemsteuerung erfasst und protokolliert, wobei die Eingabe vorzugsweise vor Ort an der jeweiligen Bearbeitungseinrichtung erfolgt.

Bevorzugt erfolgt eine vorzugsweise zentrale Verwaltung der für Instandhaltungen erforderlichen Materialien. Die Verwaltung erfolgt insbesondere durch die zentrale Systemsteuerung, ein zugeordnetes Kontrollcenter o. dgl. Bedarfsweise kann hier auch zentral eine Bestellung - insbesondere selbsttätig oder vom Techniker vor Ort - veranlasst werden.

Wenn eine Instandhaltung erforderlich ist, beispielsweise der Tausch eines Faltenbalgs, und dies von der entsprechenden Bearbeitungseinrichtung selbst feststellbar ist, meldet dies die Bearbeitungseinrichtung an die Systemsteuerung. Diese Meldung seitens der betroffenen Bearbeitungseinrichtung kann entfallen, wenn die Systemsteuerung die erforderliche Instandhaltung beispielsweise aufgrund eines aufgetretenen Bearbeitungsfehlers oder auf sonstige andere Weise feststellt. Dann wird - insbesondere von der Systemsteuerung - die (zu erwartende) Ausfallzeit ermittelt und/oder ein günstiger Zeitpunkt für die Instandhaltung vorgeschlagen. Weiter wird ein entsprechender Arbeitsplan erstellt und vorzugsweise einem Techniker übermittelt, der diesen Arbeitsplan ausführt bzw. die Instandhaltung durchführt. Zum Abschluss der Instandhaltung quittiert der Techniker die durchgeführte Instandhaltung und prüft ggf. den Lagerbestand.

Besonders bevorzugt ist es möglich, direkt an der jeweiligen Bearbeitungseinrichtung bei Bedarf neues Material, wie ein neues Teil, beispielsweise einen neuen Faltenbalg, zu ordern. Alternativ kann die Systemsteuerung den Bedarf an Materialien selbst bestimmen bzw. erzeugen und/oder bestellen. Vorzugsweise sind dabei dann entsprechende Schnittstellen zu üblichen Warenwirtschaftssystemen vorhanden.

Besonders bevorzugt erfolgt eine zentrale Verwaltung von Instandhaltungsintervallen und/oder Instandhaltungsmaßnahmen.

Besonders bevorzugt erfolgt die Planung oder Festlegung von Instandhaltungen insbesondere durch die Systemsteuerung selbsttätig oder wird durch diese unterstützt, beispielsweise durch entsprechende Vorschläge, die von einem Benutzer bestätigt oder geändert werden können.

Die Planung oder Festlegung der Instandhaltung wird besonders bevorzugt durch Erfassung von Fehlern oder Driften der Bearbeitung(en) - also der Bearbeitungsqualität - unterstützt bzw. vereinfacht.

Vorzugsweise werden Fehler oder Driften der Bearbeitung(en) erfasst und wird bzw. werden die hierfür maßgebliche(n) Bearbeitungseinrichtung(en) identifiziert oder erfasst, um deren Instandhaltung zu planen bzw. durchzuführen.

Vorzugsweise werden in Abhängigkeit von erfassten oder wahrscheinlichen Fehlern oder Driften der Bearbeitung(en) die Instandhaltungsintervalle für eine oder mehrere Bearbeitungseinrichtungen - insbesondere zentral von der Systemsteuerung - festgelegt bzw. angepasst.

Die Erfassung von Fehlern oder Driften der Bearbeitung(en) erfolgt vorzugsweise während oder unmittelbar nach der Bearbeitung, insbesondere durch eine oder mehrere Messeinrichtungen. Bedarfsweise können auch eine oder mehrere Prüfeinrichtungen in eine Bearbeitungslinie integriert sein.

Besonders bevorzugt ist ein kontinuierlich durchführbares und/oder voll automatisiertes und/oder einseitiges reflektives Messen von bearbeiteten Linsen möglich oder vorgesehen, vorzugsweise wobei das Messen stichprobenartig oder bei allen Linsen und/oder nach einzelnen oder mehreren Bearbeitungen einer Linse durchgeführt werden kann, um Fehler bzw. Driften der Bearbeitung(en) zu erfassen. Das Messen erfolgt insbesondere durch eine oder mehrere in das System bzw. die (jeweilige) Bearbeitungslinie integrierte Messeinrichtungen, die auch als Bearbeitungseinrichtung zum Prüfen bzw. Messen bezeichnet werden. Alternativ oder zusätzlich können solche Einrichtungen auch in andere Bearbeitungseinrichtungen integriert sein.

Besonders bevorzugt wird ein Messen auch bei aufgeblockten Linsen, also bei einseitig gehaltenen oder befestigten Linsen, ermöglicht, so dass die bisher sehr oft verwendete Art der Fertigung bei Linsen bzw. Brillengläsern beibehalten werden kann. Jedoch sind auch sonstige Arten der Herstellung, insbesondere ein sogenanntes "blockfreies" Fertigen, möglich.

Die Auswertung der Messungen zur Erfassung von Fehlern bzw. Driften erfolgt vorzugsweise durch eine statistische Fehlerquellensuche, um einzelne oder mehrere Bearbeitungseinrichtungen oder Bearbeitungslinien zu identifizieren, die für Fehler bzw. Driften der Bearbeitung(en) maßgeblich sind.

Die Fehlerquellensuche kann durch eine intelligente bzw. automatisierte Interpretation von Fehlerbildern (hierbei werden beispielsweise bekannte Muster oder typische Strukturen, die durch bekannte Einflüsse verursacht werden bzw. auf bestimmte Bearbeitungen zurückgehen) erfolgen oder unterstützt werden.

Zusätzlich können Sensordaten der Bearbeitungseinrichtungen verwendet werden, um Bearbeitungseinrichtungen zu identifizieren, die maßgeblich oder möglicherweise für Fehler oder Driften verantwortlich sind.

Besonders bevorzugt wird eine Optimierung und/oder automatisierte Anpassung von Instandhaltungsintervallen, insbesondere unter Berücksichtigung von erfassten Fehlern oder Driften und/oder sonstigen Parametern, beispielsweise Art und Zeitdauer von an einer Bearbeitungseinrichtung durchgeführten Bearbeitungen und/oder Anzahl von Werkzeugwechseln o. dgl., erfolgen.

Zur Identifizierung einer oder mehrerer Bearbeitungseinrichtungen oder Bearbeitungslinien, die für Fehler oder Driften (potentiell) maßgeblich sind, können ergänzend auch historische Daten oder Ereignisse bzw. sonstige Wahrscheinlichkeiten mit ausgewertet werden.

Für Fehler oder Driften als zumindest potentiell maßgeblich identifizierte Bearbeitungseinrichtungen und/oder Bearbeitungslinien sind vorzugsweise anzeigbar und/oder werden insbesondere mit Priorität oder absolutem Vorrang für entsprechende Instandhaltungen - vorzugsweise selbsttätig durch die Systemsteuerung - eingeplant. Alternativ oder zusätzlich können solche Bearbeitungseinrichtungen oder Bearbeitungslinien - vorzugsweise selbsttätig durch die Systemsteuerung - zumindest vorsorglich von weiteren Bearbeitungen ausgenommen und/oder nur noch für Bearbeitungen mit geringeren Bearbeitungsanforderungen, also mit geringerer Bearbeitungsqualität, eingesetzt werden.

Vorzugsweise wird eine Qualitätsüberwachung bzw. ein Qualitätsmanagement auf der Basis der vorzugsweise fortlaufenden oder stichprobenartigen Messungen bzw. auf Basis der erfassten Bearbeitungsqualität ermöglicht. Dies erfolgt insbesondere durch die Systemsteuerung und/oder ein angeschlossenes bzw. davon gebildetes Kontrollcenter.

Die Verwaltung, Planung, Steuerung und/oder Protokollierung der Instandhaltung und/oder Qualitätsüberwachung kann insbesondere über die Systemsteuerung oder ein Kontrollcenter erfolgen, das an die Systemsteuerung angeschlossen oder von dieser gebildet ist.

Im Sinne der vorliegenden Erfindung bildet das Kontrollcenter einen Teil der Systemsteuerung, auch wenn es sich um eine davon getrennte Einheit oder Anwendung handelt.

Vorzugsweise werden die Linsen vorzugsweise mittels eines Transportsystems wahlweise einer von mehreren Bearbeitungslinien entsprechend einer Zuordnung zugefördert. Die Zuordnung bereits zugeordneter Linsen wird vorzugsweise bei Erfassung einer neu zu bearbeitenden Linse oder eines neu zu bearbeitenden Auftrags und/oder jeweils vor tatsächlicher Übergabe einer Linse von dem Transportsystem an die zugeordnete Bearbeitungslinie - insbesondere unter Berücksichtigung bzw. in Abhängigkeit von Zuordnungsparametern - überprüft und optional durch eine Neuzuordnung ersetzt, insbesondere also geändert bzw. angepasst.

So lässt sich eine optimale Auslastung des Systems bzw. der Bearbeitungslinien und/oder Bearbeitungseinrichtungen und/oder eine besonders effiziente Bearbeitung mit sehr guter Bearbeitungsqualität erreichen oder zumindest unterstützen, da Instandhaltungen gezielt eingeplant werden können.

Die Festlegung bzw. Änderung der Zuordnung ermöglicht insbesondere eine Vereinfachung des Produktionsplanungssystems bzw. eine hohe Maschinenauslastung und/oder eine hohe Flexibilität, beispielsweise bei Ausfall einzelner Bearbeitungseinrichtungen oder Bearbeitungslinien.

Bei der bevorzugten Festlegung bzw. Änderung der Zuordnung können - insbesondere ebenso wie bei der ursprünglichen (ersten) Zuordnung - verschiedene Zuordnungsparameter berücksichtigt werden, die insbesondere die Verfügbarkeit und Befähigung einzelner Bearbeitungseinrichtungen und/oder Bearbeitungslinien und/oder die Bearbeitungszeiten, Bearbeitungsreihenfolgen und/oder sonstige Bearbeitungsanforderungen beinhalten oder abbilden.

Bei der Festlegung können auch Besonderheiten oder Prioritäten, wie Anforderungen hinsichtlich Bearbeitungsgenauigkeit, Bearbeitungsdauer, Werkzeugverfügbarkeit oder sonstige Befähigung oder dergleichen, von der jeweiligen Bearbeitungseinrichtung bzw. durch entsprechende Eingriffe oder Vermerke, beispielsweise der (zentralen) Systemsteuerung oder einer zentralen Liniensteuerung der jeweiligen Bearbeitungslinie, berücksichtigt werden.

Die Zuordnung bereits zugeordneter Linsen kann nach oder vor jeder Bearbeitung oder vor jeder Zuförderung einer bereits zugeordneten Linse überprüft und optional geändert, also durch eine neue Zuordnung ersetzt werden. Auch bei dieser Überprüfung der Zuordnung und optionalen Änderung können wieder ausstehende oder zu erwartende Instandhaltungen bzw. Ausfallzeiten und/oder sonstige Zuordnungsparameter, insbesondere im bereits genannten Sinne, berücksichtigt werden.

Die vorschlagsgemäße Festlegung der Zuordnung bzw. deren Änderung - also Neuzuordnung - ist einer optimalen Auslastung des Systems bzw. der Bearbeitungslinien oder Bearbeitungseinrichtungen und/oder einer besonders effizienten Bearbeitung zuträglich, da insbesondere auch bei sich mit hoher Dynamik ändernden Fertigungs- und Randbedingungen eine schnelle Reaktion im Sinne einer Selbstkorrektur der Gesamtanlage zur raschen Findung des Optimums, beispielsweis hinsichtlich der Ressourcenauslastung, ermöglicht oder zumindest unterstützt wird.

Ein vorschlagsgemäßes System zeichnet sich insbesondere durch eine Systemsteuerung aus, die derart ausgebildet ist, dass die Zuordnung unter Berücksichtigung ausstehender oder zu erwartender Instandhaltungen bzw. damit verbundener Ausfallzeiten festgelegt bzw. geändert wird. Das Transportsystem bzw. Transfersystem fördert dann die Linsen den Bearbeitungslinien bzw. Bearbeitungseinrichtungen entsprechend der Zuordnung zu. Hierdurch ergeben sich wiederum entsprechende Vorteile, wie bei den oben genannten Verfahren.

Generell ist anzumerken, dass vorzugsweise mehrere Bearbeitungsschritte (verschiedene Bearbeitungen) erforderlich sind, um aus einem Rohling eine bearbeitete bzw. fertige Linse zu fertigen, wobei die Reihenfolge der Bearbeitungen vorzugsweise in einem sogenannten Bearbeitungsplan festgelegt sind bzw. werden.

Bei mehreren Bearbeitungseinrichtungen für die gleiche Bearbeitung, beispielsweise für das Polieren, kann die Auswahl der jeweils konkret zu benutzenden Bearbeitungseinrichtung grundsätzlich beispielsweise in Abhängigkeit von Verfügbarkeit und/oder anstehenden oder geplanten Instandhaltungen vorgegeben oder durch die jeweilige Bearbeitungseinrichtung selbstständig oder unabhängig erfolgen.

Die optionale unabhängige Bearbeitung durch die Bearbeitungseinrichtungen ist vorzugsweise so zu verstehen, dass die Bearbeitung in der jeweiligen Einrichtung unabhängig von anderen Bearbeitungen und unabhängig von dem Transfersystem abläuft. Die Reihenfolge der erforderlichen Bearbeitungen einer Linse ist und bleibt immer vorgegeben bzw. erhalten, auch wenn diese Bearbeitungen in verschiedenen Bearbeitungseinrichtungen und ggf. sogar verschiedenen Bearbeitungslinien ohne vorherige Festlegung oder Zuordnung der einzelnen Bearbeitungseinrichtungen für die einzelnen Bearbeitungen erfolgen.

Der tatsächliche Bearbeitungszustand spiegelt sich im Bearbeitungsstatus wieder, der insbesondere angibt, welche Bearbeitung schon erfolgt ist oder als nächstes erfolgen soll, wobei dies besonders bevorzugt unter Verweis auf den entsprechenden Bearbeitungsplan für die jeweilige Linse erfolgt.

Alternativ oder zusätzlich ist die optionale unabhängige Bearbeitung durch die Bearbeitungseinrichtungen vorzugsweise so zu verstehen, dass die Bearbeitungseinrichtungen selbsttätig bzw. unabhängig von einer zentralen Steuerung zu bearbeitende Linsen - besonders, insbesondere auch bevorzugt unter Berücksichtigung der erforderlichen Bearbeitung - auswählen bzw. anfordern und/oder sich zufördern lassen.

Die genannte Auswahl kann wahlweise in einer logischen Ebene oder in einer physischen Ebene erfolgen. Bei Auswahl in der logischen Ebene kann die jeweilige Bearbeitungseinrichtung beispielsweise einen Auftrag oder einen Datensatz mit Informationen über eine zu bearbeitende Linse aus einem Datenspeicher, Datenbankserver, einer Systemsteuerung o. dgl. auswählen und sich diese Linse bzw. den entsprechenden Träger mit dieser Linse dann zufördern (lassen).

Bei Auswahl in der physischen Ebene kann eine Bearbeitungseinrichtung beispielsweise zu bearbeitende Linsen bzw. deren Träger - insbesondere mittels eines Sensors o. dgl. - erfassen oder identifizieren und unter Berücksichtigung des jeweiligen Auftrags bzw. Datensatzes mit Informationen zur erforderlichen Bearbeitung eine geeignete Linse auswählen und sich zur Bearbeitung zufördern (lassen). Hierdurch wird eine zumindest weitgehend autonome Bearbeitung von Linsen durch die einzelnen Bearbeitungseinrichtungen erreicht, so dass insbesondere bei der Erweiterung von Anlagen eine ansonsten erforderliche, sehr aufwendige Umprogrammierung oder Neuprogrammierung von zentralen Steuerungen ganz unterbleiben oder zumindest minimiert werden kann.

Ein bevorzugter Aspekt der vorliegenden Erfindung liegt also insbesondere darin, dass die Bearbeitungseinrichtungen zumindest möglichst weitgehend selbsttätig bzw. unabhängig arbeiten, so dass besonders bevorzugt die Bearbeitungseinrichtungen individuell Linsen vom Transfersystem holen bzw. anfordern, um eine erforderliche Bearbeitung durchzuführen, und danach die bearbeiteten Linsen wieder an das Transfersystem zurückgeben, also in die Förderung bzw. den Förderkreislauf wieder einschleusen. Diese Selbstständigkeit bzw. Unabhängigkeit der Bearbeitungseinrichtungen vereinfacht das Einbinden zusätzlicher oder neuer Bearbeitungseinrichtungen in das System wesentlich.

Bei einer im vorgenannten Sinne unabhängig arbeitenden Bearbeitungseinrichtung ist es zur Systemoptimierung wichtig, wer das Kommando gibt, dass eine neue Linse angefordert bzw. geladen werden muss, und wer die Zuordnung, welche Linse von welcher Bearbeitungseinrichtung (als nächstes) bearbeitet wird, (endgültig) festlegt bzw. ändert. Vorzugsweise bzw. vorschlagsgemäß ist die (zentrale) Systemsteuerung bzw. die Bearbeitungslinie zu dieser (endgültigen) Festlegung bzw. einer (nur bedarfsweise) erfolgenden Änderung vorgesehen und/oder ausgebildet.

Generell erfolgt vorschlagsgemäß vorzugsweise die (zentrale) Zuordnung der zu bearbeitenden Linsen zu der jeweiligen Bearbeitungslinie. Die Zuordnung einer zu bearbeitenden Linse zu einer Bearbeitungseinrichtung bzw. die Anforderung der Linse von einer Bearbeitungseinrichtung erfolgt dann vorzugsweise (nur) durch die einzelne Bearbeitungseinrichtung, bevorzugt also unabhängig von dem Zustand und/oder der Verfügbarkeit von anderen Bearbeitungseinrichtungen, wobei hierbei natürlich die jeweiligen Erfordernisse für die anstehende Bearbeitung berücksichtigt werden.

Sollte beispielsweise eine Bearbeitungseinrichtung nicht mit ausreichender Bearbeitungsqualität (derzeit) arbeiten oder erst einer Instandhaltung unterzogen werden müssen bzw. für eine Instandhaltung eingeplant oder gesperrt sein, würde dies vorzugsweise zentral von der Systemsteuerung oder Bearbeitungslinie der jeweiligen Bearbeitungseinrichtung (generell, also ohne Bezug auf eine konkret zu bearbeitende Linse) mitgeteilt, so dass die Bearbeitungseinrichtung dann im Einzelfall keine zu bearbeitende Linse anfordert bzw. nur eine Linse anfordert, die auch tatsächlich in der Bearbeitungseinrichtung bearbeitet werden kann.

Vorzugsweise teilt die Bearbeitungseinrichtung jeweils auch ihren Status, insbesondere ob eine Instandhaltung ansteht oder durchgeführt wird, der Systemsteuerung bzw. Bearbeitungslinie mit.

Besonders bevorzugt wird eine Zuordnung von Linsen zu einer Bearbeitungslinie nicht verändert, solange die Bearbeitungslinie insgesamt nicht überlastet ist. Innerhalb der Bearbeitungslinie werden die Aufträge bzw. Bearbeitungen vorzugsweise eigenorganisiert verteilt bzw. selbsttätig von den Bearbeitungseinrichtungen der Bearbeitungslinie angefordert und abgearbeitet. Dies ist solange möglich, bis beispielsweise eine Bearbeitungseinrichtung aufgrund einer erforderlichen Instandhaltung oder aus sonstigen Gründen ausfällt oder für die (erforderliche) Bearbeitung nicht mehr zur Verfügung steht, so dass nun die geringere verbleibende Kapazitätsgrenze der Bearbeitungslinie (schneller) erreicht wird und/oder ein Ausfall der Bearbeitungslinie insgesamt eine Änderung der Zuordnung zu einer anderen Bearbeitungslinie erforderlich macht.

Vorzugsweise ist vorgesehen, dass bei Ausfall einer Bearbeitungseinrichtung, beispielsweise aufgrund einer erforderlichen Instandhaltung, die Bearbeitungseinrichtung eine Überprüfung der Zuordnung initiiert, insbesondere durch eine Übertragung einer entsprechenden Statusinformation oder eines Initiierungssignals an die Systemsteuerung oder Bearbeitungslinie.

Generell ist anzumerken, dass eine Mitteilung an die Bearbeitungslinie oder eine Mitteilung von der Bearbeitungslinie insbesondere so zu verstehen ist, dass mit einer Steuerung der Bearbeitungslinie kommuniziert wird, auch wenn diese vorzugsweise vorgesehene Steuerung der Bearbeitungslinie nicht explizit benannt wird.

Vorschlagsgemäß wird eine besonders effiziente Kombination einer zentralen Steuerung für die Zuordnung zu einer Bearbeitungslinie einerseits und eine dezentrale Steuerung oder Organisation der Auftragsabarbeitung durch die einzelnen Bearbeitungseinrichtungen andererseits ermöglicht, wobei die einzelnen Bearbeitungseinrichtungen insbesondere nicht untereinander kommunizieren müssen. Dies gestattet einen einfachen und sehr leicht adaptierbaren Aufbau.

Bei einem System mit mehreren, vorzugsweise unabhängig arbeitenden Bearbeitungslinien ist es zur Systemoptimierung vorteilhaft bzw. vorgesehen, die Zuordnung der Linsen zu einer bestimmten Bearbeitungslinie vor der tatsächlichen Zuförderung zu dieser Bearbeitungslinie und/oder bei Erfassung eines neuen Auftrags oder einer neuen Linse zu überprüfen und gegebenenfalls anzupassen oder zu ändern, insbesondere also durch eine Neuzuordnung zu ersetzen. Hierbei können dann auch insbesondere neue bzw. aktuelle Informationen (Zuordnungsparameter), wie die Verfügbarkeit beispielsweise bestimmter Bearbeitungen oder Überlastung bzw. Ausfall einer Bearbeitungslinie bzw. bestimmter Bearbeitungseinrichtungen und/oder anstehende, zu erwartende und/oder aktuelle Instandhaltungen, berücksichtigt werden, um insbesondere eine effiziente Bearbeitung bzw. schnelle oder kostengünstige Bearbeitung zu ermöglichen bzw. zu gewährleisten.

Entsprechend vorteilhaft ist die alternativ oder zusätzlich vorgesehene zentrale Verwaltung von Aufträgen zur Bearbeitung von Linsen bzw. Brillengläsern, wobei die Aufträge insbesondere unter Berücksichtigung von Zuordnungsparametern, die insbesondere auch die Verfügbarkeit von entsprechenden Rohlingen, Bearbeitungskapazitäten und Befähigungen berücksichtigen, wahlweise an ein Teilsystem von mehreren Teilsystemen an unterschiedlichen Standorten übermittelt werden. An dem entsprechenden Teilsystem kann dann die auftragsgemäße Bearbeitung insbesondere eines dort bereits vorhandenen Rohlings in gewünschter Weise erfolgen. Die (fertig) bearbeitete Linse, insbesondere das Brillenglas, kann dann beispielsweise an die Lieferadresse verschickt werden. Auf diese Weise können neben einer optimalen Auslastung auch sehr kurze Lieferzeiten realisiert werden, da beispielsweise unterschiedliche Verfügbarkeiten, insbesondere auch aufgrund unterschiedlicher Zeitzonen der verschiedenen Standorte, der Teilsysteme berücksichtigt werden können.

Die vorgenannten und nachfolgenden Aspekte und Merkmale der vorliegenden Erfindung können beliebig miteinander kombiniert, aber auch jeweils unabhängig voneinander realisiert werden.

Weitere Aspekte, Merkmale, Vorteile und Eigenschaften der vorliegenden Erfindung ergeben sich aus den Ansprüchen und der nachfolgenden Beschreibung bevorzugter Ausführungsbeispiele anhand der Zeichnung. Es zeigt:
- Fig. 1: eine schematische Darstellung eines vorschlagsgemäßen Systems mit mehreren Bearbeitungseinrichtungen;
- Fig. 2: eine schematische Darstellung eines Linsenträgers mit zu bearbeitenden Linsen;
- Fig. 3: eine schematische Darstellung des vorschlagemäßen Systems gemäß eines anderen Ausführungsbeispiels;
- Fig. 4: ein schematisches Blockschaltbild eines bevorzugten Steuerungsaufbaus eines vorschlagsgemäßen Systems;
- Fig. 5: eine schematische Darstellung einer vorschlagsgemäßen Systems mit einem Transportsystem und mehreren daran angeschlossenen Bearbeitungslinien; und
- Fig. 6: eine schematische Darstellung einer vorschlagsgemäßen Zuordnung von zu bearbeitenden Linsen zu Bearbeitungslinien und deren Neuzuordnung.

In den Figuren werden für gleiche oder gleichartige Komponenten und Einrichtungen die gleichen Bezugszeichen verwendet, wobei sich die gleichen oder entsprechenden Vorteile und Eigenschaften ergeben, auch wenn eine wiederholte Beschreibung weggelassen ist.

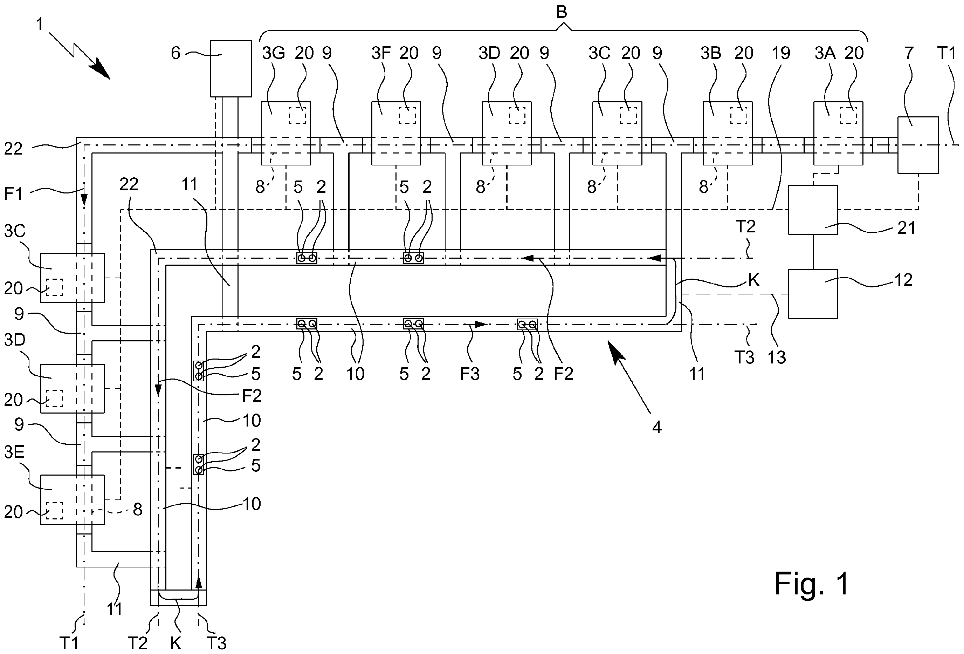

Fig. 1 zeigt in einer schematischen Darstellung ein vorschlagsgemäßes System 1 zur Bearbeitung von optischen Linsen 2, also eine Linsenbearbeitungsanlage. Nachfolgend wird als besonders bevorzugtes Ausführungsbeispiel primär auf die Bearbeitung von Linsen für Brillen bzw. von Brillengläsern näher eingegangen. Vorzugsweise gelten diese Ausführungen jedoch entsprechend auch für das Bearbeiten sonstiger Linsen 2 oder generell optischer Werkstücke.

Das System 1 weist mehrere separate Bearbeitungseinrichtungen 3 zur unabhängigen Bearbeitung der Linsen 2 auf. Beispielsweise kann das System 1 insbesondere mindestens eine Bearbeitungseinrichtung 3A zum Blocken (temporäres Verbinden mit einem Halter) von Linsen 2, eine Bearbeitungseinrichtung 3B zum Zwischenlagern von Linsen 2 (vorzugsweise zum Abkühlen nach dem Blocken), eine Bearbeitungseinrichtung 3C zur formgebenden, insbesondere spanenden oder fräsenden Bearbeitung von Linsen 2, eine Bearbeitungseinrichtung 3D zum Polieren von Linsen 2, eine Bearbeitungseinrichtung (Messeinrichtung) 3E zum Prüfen bzw. Messen von Linsen 2, eine Bearbeitungseinrichtung 3F zum Markieren von Linsen 2 und/oder eine Bearbeitungseinrichtung 3G zum Beschichten von Linsen 2 aufweisen.

Bedarfsweise können auch mehrere gleichartige Bearbeitungseinrichtungen 3, beispielsweise zwei oder mehr Bearbeitungseinrichtungen 3 für die gleiche Bearbeitung vorhanden bzw. in das System 1 integriert sein. Beispielsweise können mehrere Bearbeitungseinrichtungen 3C zur formgebenden Bearbeitung, mehrere Bearbeitungseinrichtungen 3D zum Polieren, usw. vorgesehen sein. Dies hängt insbesondere von dem Durchsatz der verschiedenen Bearbeitungseinrichtungen 3 und/oder den gewünschten Bearbeitungen ab.

Ein besonderer Vorteil des vorschlagsgemäßen Systems 1 besteht darin, dass zusätzliche Bearbeitungseinrichtungen 3 auch später je nach Bedarf noch in das System 1 sehr leicht integriert bzw. eingebunden werden können, Erweiterungen also sehr einfach erfolgen können.

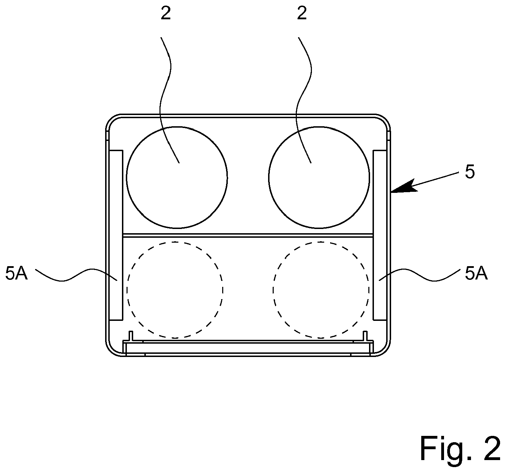

Das System 1 weist vorzugsweise ein Transfersystem 4 zum Transport der Linsen 2 bzw. von Linsenträgern 5 mit den Linsen 2 zu und von den Bearbeitungseinrichtungen 3 auf. Das Transfersystem 4 führt die Linsen 2 bzw. Linsenträger 5 (vgl. Fig. 2) insbesondere den Bearbeitungseinrichtungen 3 zu und/oder transportiert bzw. fördert die Linsen 2 bzw. Linsenträger 5 nach einer erfolgten Bearbeitung in einer Bearbeitungseinrichtung 3 zu einer anderen Bearbeitungseinrichtung 3 oder zu einer Abgabe 6, wie in Fig. 1 angedeutet. Die Abgabe 6 kann beispielsweise eine Übergabeeinrichtung, einen Rolltisch und/oder sonstige Speichereinrichtungen umfassen oder daraus gebildet sein.

Das System 1 weist neben der Abgabe 6 vorzugsweise auch eine Aufnahme 7 auf, die dem Aufnehmen zu bearbeitender Linsen 2 bzw. von die zu bearbeitenden Linsen 2 tragenden Linsenträgern 5 dient.

Jeder Bearbeitungseinrichtung 3 ist vorzugsweise eine eigene Fördereinrichtung 8 zur insbesondere linearen Förderung mindestens einer Linse 2 oder eines Linsenträgers 5 zugeordnet. Insbesondere ist die zugeordnete Fördereinrichtung 8 in die jeweilige Bearbeitungseinrichtung 3 integriert bzw. eingebaut oder an diese angebaut. Die Fördereinrichtung 8 ist vorzugsweise als Förderband ausgebildet.

Die Fördereinrichtungen 8 der Bearbeitungseinrichtungen 3 werden vorzugsweise jeweils von der jeweiligen Bearbeitungseinrichtung 3 bzw. deren Maschinensteuerung 20 gesteuert.

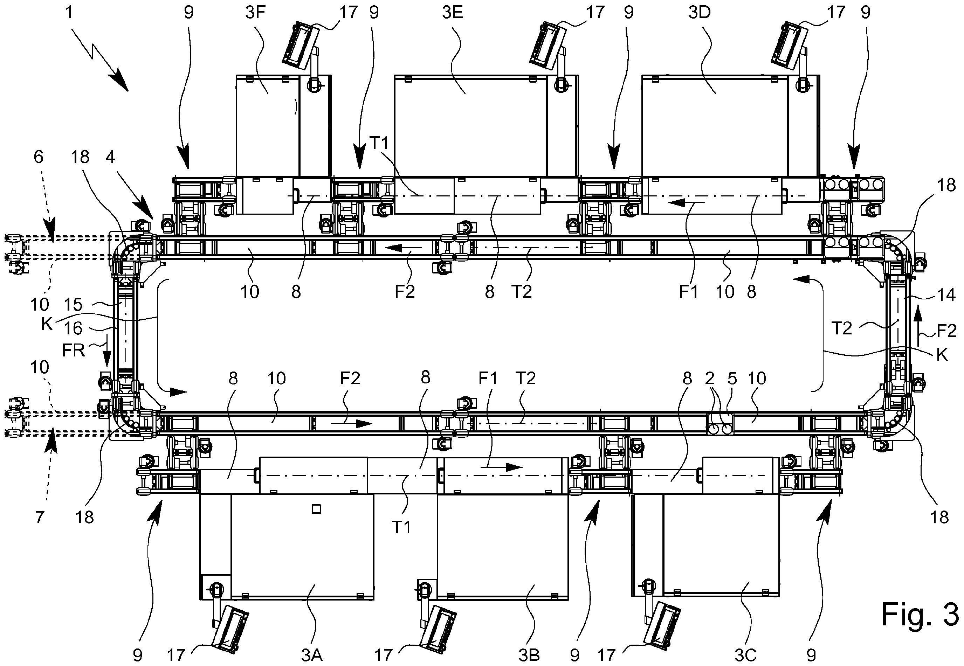

Besonders bevorzugt weisen die Bearbeitungseinrichtungen 3 jeweils ein Steuer- oder Bedienpult 17 (in Fig. 3 angedeutet) auf.

Die Bearbeitungseinrichtungen 3 werden vorzugsweise nebeneinander angeordnet bzw. aufgestellt, so dass die Fördereinrichtungen 8 zumindest im Wesentlichen in einer Linie verlaufen bzw. hintereinander liegen und/oder eine vorzugsweise zumindest im Wesentlichen geradlinige erste Transportspur T1 (strichpunktiert in Fig. 1 angedeutet) bilden.

Das Transfersystem 4 weist vorzugsweise Transfereinrichtungen 9 auf, die jeweils zwischen zwei benachbarten Bearbeitungseinrichtungen 3 (einer Reihe) angeordnet sind. Vorzugsweise sind Transfereinrichtungen 9 zwischen einigen oder allen (unmittelbar) benachbarten Bearbeitungseinrichtungen 3 bzw. deren Fördereinrichtungen 8 angeordnet.

Die Transfereinrichtungen 9 sind vorzugsweise jeweils zur Aufnahme und insbesondere temporären Zwischenspeicherung mindestens einer Linse 2 oder eines Linsenträgers 5 und/oder zur bedarfsweisen Weiterförderung dieser Linse 2 bzw. dieses Linsenträgers 5 wahlweise an die Fördereinrichtung 8 einer nachfolgenden Bearbeitungseinrichtung 3 oder an eine zweite Transportspur T2 des Systems 1 bzw. Transfersystems 4 ausgebildet.

Die zweite Transportspur T2 verläuft vorzugsweise ebenfalls wie die erste Transportspur T1 zumindest im Wesentlichen geradlinig oder polygonartig und/oder parallel zu der ersten Transportspur T1.

Die Förderrichtung der ersten Transportspur T1 ist in Fig. 1 durch einen Pfeil F1 angedeutet. Die zweite Transportspur T2 fördert vorzugsweise in die gleiche Richtung, wie durch Pfeil F2 angedeutet.

Die zweite Transportspur T2 dient insbesondere dazu, dass Linsen 2 bzw. Linsenträger 5 an einzelnen Bearbeitungseinrichtungen 3 vorbei gefördert werden können. Beispielsweise kann eine solche Vorbeiförderung zur besseren Auslastung von Bearbeitungseinrichtungen 3, zur Förderung zu einer bestimmten Bearbeitungseinrichtung 3 für eine spezielle Bearbeitung, beispielsweise aufgrund eines Ausfalls oder einer Auslastung einer Bearbeitungseinrichtung 3 oder aufgrund einer nicht erforderlichen Bearbeitung durch eine Bearbeitungseinrichtung 3, gewünscht oder erforderlich sein. Alternativ oder zusätzlich kann die Vorbeiförderung auch einem Überholen von anderen Linsen 2 bzw. Linsenträgern 5 dienen, beispielsweise wenn eine vorrangige Bearbeitung einer bestimmten Linse 2 oder mehrerer bestimmter Linsen 2 erfolgen soll.

Vorzugsweise können die Linsen 2 bzw. Linsenträger 5 mittels der Transfereinrichtungen 9 zwischen der ersten und zweiten Transportspur T1, T2 wechseln. Insbesondere ist ein solcher Wechsel zwischen jeder der Bearbeitungseinrichtungen 3 und/oder mittels jeder Transfereinrichtung 9 und/oder in jede Richtung, also von der ersten zur zweiten Transportspur T1, T2 und umgekehrt, möglich.

Das System 1 bzw. Transfersystem 4 weist optional eine dritte Transportspur T3 auf, die vorzugsweise zumindest im Wesentlichen geradlinig und/oder parallel zu den anderen Transportspuren T1 und T2 verläuft.

Die Förderrichtung F3 der dritten Transportspur T3 ist vorzugsweise den Förderrichtungen F1 und F2 der anderen Transportspuren T1 und T2 entgegen gerichtet bzw. verläuft vorzugsweise rückwärts. Die Transportspur T3 dient also insbesondere einer Rückförderung oder entgegengesetzten Förderung von Linsen 2 bzw. Linsenträgern 5 und/oder einer Kreisförderung K, beispielsweise zur Wiedereinschleusung (über entsprechende Wechselmöglichkeiten) in die erste oder zweite Transportspur T1, T2 für eine weitere Bearbeitung oder ggf. zur Rückförderung an die Abgabe 6.

Das System 1 bzw. Transfersystem 4 weist vorzugsweise Fördereinrichtungen 10 und/oder Wechseleinrichtungen 11, insbesondere zusammen mit den Fördereinrichtungen 8 und Transfereinrichtung 9 zur Bildung der ersten, zweiten und/oder dritten Transportspur T1, T2, T3 auf.

Die Fördereinrichtung 8, die Transfereinrichtung 9, der Fördereinrichtungen 10 und/oder Wechseleinrichtungen 11 sind vorzugsweise als Gutförderer ausgebildet.

Die dritte Transportspur T3 ist vorzugsweise entsprechend oder ähnlich wie die zweite Transportspur T2, besonders bevorzugt aus mehreren in einer Linie bzw. hintereinander angeordneten Fördereinrichtungen 10 aufgebaut.

Die Transfereinrichtungen 9 und/oder Fördereinrichtungen 10 der zweiten und/oder dritten Transportspur T2, T3 sind vorzugsweise unabhängig voneinander steuerbar bzw. antreibbar, so dass eine unabhängige Förderung von Linsen 2 bzw. Linsenträgern 5 entlang der ersten, zweiten und/oder dritten Transportspur T1, T2, T3 und/oder ein Wechsel zwischen den Transportspuren T1, T2, T3 möglich ist.

Alternativ oder zusätzlich zu der unterschiedlichen Steuerung der Transfereinrichtungen 9, Fördereinrichtungen 10 und/oder Wechseleinrichtungen 11 und/oder zu einer Rückwärtsförderung kann ein Anhalten einzelner Linsen 2 bzw. Linsenträger 5 auch durch entsprechende Stoppeinrichtungen o. dgl. (nicht dargestellt) realisiert werden.

Die Wechseleinrichtungen 11 und die Transfereinrichtungen 9 können auch kombiniert bzw. in Verlängerung angeordnet sein bzw. eine Baueinheit bilden, wie in Fig. 1 im rechten Bereich beispielhaft angedeutet.

Vorzugsweise weist das System 1 im Bereich eines Endes bzw. der Abgabe 6, insbesondere wenn diese von der Aufnahme 7 räumlich getrennt ist, eine zugeordnete Transfereinrichtung 9 und/oder Wechseleinrichtung 11 auf, wie in Fig. 1 angedeutet.

Vorzugsweise sind eine oder mehrere Wechseleinrichtungen 11 im Bereich des Anfangs und des Endes der zweiten oder dritten Transportspur T2, T3 und/oder dazwischen angeordnet, insbesondere um einen Kreislauf bzw. eine Zirkulation oder Kreisförderung K von Linsen 2 bzw. Linsenträgern 5 zu ermöglichen.

Das System 1 bzw. das Transfersystem 4 weist vorzugsweise eine Transfersteuerung bzw. Steuereinrichtung 12 - insbesondere eine speicherprogrammierbare Steuerung oder HMI (Mensch-Maschine-Schnittstelle) - zur Steuerung des Transfersystems 4 bzw. der Transfereinrichtungen 9 und/oder Fördereinrichtungen 10 sowie, sofern vorhanden, der Wechseleinrichtungen 11 und optional der Aufnahme 7 und/oder Abgabe 6 auf. Der Anschluss erfolgt besonders bevorzugt über ein Bussystem 13.

Vorzugsweise erfolgt also eine gemeinsame bzw. zentrale Steuerung des Transfersystems 4. Die den Bearbeitungseinrichtungen 3 zugeordneten Fördereinrichtungen 8 bilden vorzugsweise jedoch keinen Teil des Transfersystems 4 bzw. der Transfersteuerung. Stattdessen werden die Fördereinrichtungen 8 der Bearbeitungseinrichtungen 3 vorzugsweise von den Bearbeitungseinrichtungen 3 selbst bzw. direkt oder von deren Maschinensteuerungen 20 gesteuert. Die Fördereinrichtungen 8 sind dementsprechend vorzugsweise jeweils an die zugeordnete Bearbeitungseinrichtung 3 bzw. deren Maschinensteuerung 20 zur Steuerung der jeweiligen Fördereinrichtung 8 angeschlossen.

Anstelle des hier beschriebenen Linsenträgers 5 kann jedoch auch ein sonstiger Halter für eine Linse 2 oder mehrere Linsen 2 eingesetzt werden.

Das System 1 weist vorzugsweise die zentrale Anlagen- bzw. Systemsteuerung 21 auf. An diese sind vorzugsweise einzelne, mehrere oder alle Bearbeitungseinrichtungen 3 oder deren Maschinensteuerungen 20, beispielsweise über ein Datennetzwerk, ein (weiteres) Bussystem 19, eine Ethernet-Verkabelung oder dergleichen, angeschlossen.

Gemäß einem besonders bevorzugten Aspekt der vorliegenden Erfindung kann eine Zirkulation bzw. Kreisförderung K der Linsen 2 bzw. Linsenträger 5 erfolgen.

Dies kann insbesondere eine Speicherung von Linsen 2 bzw. Linsenträgern 5 ermöglichen und/oder die Bildung von unerwünschten Stauungen verhindern oder minimieren. Insbesondere werden die Linsen 2 bzw. Linsenträger 5 nach Bedarf und/oder Verfügbarkeit an gewünschte Bearbeitungseinrichtungen 3 ausgeschleust bzw. gefördert. Dies erfolgt insbesondere durch entsprechende Querförderung und/oder einen Wechsel zur ersten Transportspur T1 bzw. zu einer der gewünschten Bearbeitungseinrichtung 3 zugeordneten oder vorgeordneten Transfereinrichtung 9.

Insbesondere ist es möglich, dass bei der Zirkulation bzw. Kreisförderung K mehrere Linsenträger 5 zirkulieren bzw. in einem Kreislauf gefördert werden, beispielsweise so lange, bis die nächste oder eine gewünschte Bearbeitungseinrichtung 3 zur Aufnahme bzw. Zuförderung für die passende Bearbeitung bereit ist.

Bei der Systemsteuerung 21 kann es sich um einen Server, um ein Datenbanksystem oder dergleichen handeln.

Die Systemsteuerung 21 verwaltet insbesondere die von der System 1 abzuarbeitenden Aufträge bzw. die von dem System 1 zu bearbeitenden Linsen 2 bzw. die für die Bearbeitung erforderlichen Informationen, beispielsweise Bearbeitungsdaten, Bearbeitungspläne bzw. Bearbeitungsreihenfolgen, Bearbeitungsstatus, geplante oder erforderliche Bearbeitungsschritte, optische und/oder geometrische Informationen oder Daten der Linsen 2 und/oder sonstige Informationen, beispielsweise über einzusetzende oder verfügbare Werkzeuge o. dgl.

Vorzugsweise sind die Transfersteuerung bzw. Steuereinrichtung 12 einerseits und die Systemsteuerung 21 andererseits zum Informations- bzw. Datenaustausch miteinander gekoppelt, wie schematisch angedeutet.

Vorzugsweise kann die Systemsteuerung 21 das Transfersystem 4 bzw. die Transfereinrichtungen 9, Fördereinrichtungen 10 und/oder Wechseleinrichtungen 11 insbesondere über die Steuereinrichtung 12 derart steuern, dass gewünschte Linsen 2 bzw. Linsenträger 5 zu den jeweiligen Bearbeitungseinrichtungen 3, bedarfsweise nur auf entsprechende Anforderung der jeweiligen Bearbeitungseinrichtung 3 hin, gefördert werden.

Insbesondere können verschiedene oder alle Bearbeitungseinrichtungen 3 individuell Arbeitsaufträge bzw. zu bearbeitende Linsen 2 oder Linsenträger 5 mit zu bearbeitenden Linsen 2 selbsttätig vom Transfersystem 4 anfordern oder sich holen, die jeweilige erforderliche Bearbeitung durchführen und die Linsen 2 nach der Bearbeitung wieder zurück auf das Transfersystem 4 schleusen bzw. an dieses übergeben.

Das Holen bzw. Anfordern von Linsen 2 zur Bearbeitung durch eine, mehrere oder ggf. alle Bearbeitungseinrichtungen 3 erfolgt also vorzugsweise selbsttätig bzw. unabhängig. Insbesondere kann eine Bearbeitungseinrichtung 3 selbsttätig insbesondere unter Berücksichtigung eines Bearbeitungsplans und Bearbeitungsstatus (diese Bearbeitungsdaten oder Informationen werden insbesondere von der Systemsteuerung 21 oder einer Datenbank, einem Datenspeicher o. dgl. abgefragt oder bereitgestellt) feststellen, ob eine (insbesondere sich in der Nähe oder kurz vor der Bearbeitungseinrichtung 3 befindende) Linse 2 zur Bearbeitung in der jeweiligen Bearbeitungseinrichtung 3 geeignet ist, um bei entsprechender Kapazität der Bearbeitungseinrichtung 3 diese bzw. den entsprechenden Linsenträger 5 anzufordern bzw. sich zufördern zu lassen.

Insbesondere können also mehrere Bearbeitungseinrichtungen 3 für die gleiche Bearbeitung unabhängig voneinander eine Linse 2 für die nächste Bearbeitung auswählen und/oder anfordern. Beim Darstellungsbeispiel erfolgt das Anfordern durch eine Bearbeitungseinrichtung 3 insbesondere dann, wenn diese freigefahren worden ist. Bei Bedarf kann das Anfordern jedoch auch schon vorher zur Minimierung von Wartezeiten erfolgen. Dann kann in der Zwischenzeit die nächste zu bearbeitende Linse 2 bzw. der entsprechende Linsenträger 5 insbesondere bereits der der Bearbeitungseinrichtung 3 vorgeordneten Transfereinrichtung 4 zugefördert bzw. von dieser aufgenommen werden und dort warten, bis die Bearbeitungseinrichtung 3 zur Aufnahme der nächsten Linse 2 bzw. des nächsten Linsenträgers 5 bereit ist.

Vorzugsweise gibt die jeweilige Bearbeitungseinrichtung 3 eine entsprechende Information oder ein entsprechendes Signal an die Steuereinrichtung 12 aus, wenn eine Linse 2 oder ein Linsenträger 5 nach der Bearbeitung an die nachgeordnete Transfereinrichtung 9 bzw. an das Transfersystem 4 abgegeben werden soll oder bereits abgegeben wurde. Je nach Kapazität wird dann die jeweilige Linse 2 bzw. der jeweilige Linsenträger 5 von dem Transfersystem 4 bzw. der der jeweiligen Bearbeitungseinrichtung 3 nachgeordneten Transfereinrichtung 9 aufgenommen, beispielsweise in einem Aufnahmebereich, und/oder weitergefördert, beispielsweise zu einer nachgeordneten Bearbeitungseinrichtung 3 und/oder in die zweite Transportspur T2 oder die Kreisförderung K wieder eingeschleust. Dies kann wahlweise durch das Transfersystem 4 bzw. dessen Steuereinrichtung 12 selbstständig und/oder in Abstimmung mit und/oder in Abhängigkeit von der Systemsteuerung 21 erfolgen.

Des Weiteren wird der zur Aufnahme einer Linse 2 bzw. eines Linsenträgers 5 bereiten Bearbeitungseinrichtung 3 dann wieder eine Linse 2 bzw. ein Linsenträger 5 zugefördert, wobei die Auswahl - wie bereits erwähnt - besonders bevorzugt durch die jeweilige Bearbeitungseinrichtung 3 bzw. deren Maschinensteuerung 20 und/oder durch die Systemsteuerung 21, besonders bevorzugt unter Berücksichtigung von für die Bearbeitung relevanten Daten, wie Bearbeitungsplan und Bearbeitungszustand, insbesondere aus der Systemsteuerung 21, erfolgt. Die Steuerung der Zuförderung erfolgt dann vorzugsweise über die Steuereinrichtung 12, kann bedarfsweise aber auch von der jeweiligen Bearbeitungseinrichtung 3 bzw. deren Maschinensteuerung 20 gesteuert werden.

Alternativ oder zusätzlich kann die jeweilige Bearbeitungseinrichtung 3 bei der Zu- und Abförderung von Linsen 2 bzw. Linsenträgern 5 bzw. bei der Ansteuerung der vorgeordneten und/oder nachgeordneten Transfereinrichtung 9 Vorrang, beispielsweise vor einer nachgeordneten oder vorgeordneten Bearbeitungseinrichtung 3 und/oder vor der Transfersteuerung bzw. Steuereinrichtung 12, haben.

Besonders bevorzugt übergibt eine Bearbeitungseinrichtung 3 bzw. deren Fördereinrichtung 8 nach der Bearbeitung eine Linse 2 bzw. einen Linsenträger 5 an das Transfersystem 4 bzw. an eine - vorzugsweise in Förderrichtung F1 nachgeordnete - Transfereinrichtung 9, sofern oder sobald dort Platz zur Aufnahme ist. Hierzu kommuniziert die Bearbeitungseinrichtung 3 bzw. deren Maschinensteuerung 20 vorzugsweise über die Systemsteuerung 21 oder direkt mit der Transfersteuerung bzw. Steuereinrichtung 12 bzw. dem Transfersystem 4 oder der jeweiligen Transfereinrichtung 9.

Nach dem Freifahren der Bearbeitungseinrichtung 3 bzw. deren Fördereinrichtung 8 kann diese wieder die nächste Linse 2 bzw. den nächsten Linsenträger 5 aufnehmen. Die Zuförderung erfolgt insbesondere über das Transfersystem 4 bzw. die vorgeordnete Transfereinrichtung 9. Die Auslösung der Zuförderung erfolgt vorzugsweise durch eine Anforderung der jeweiligen Bearbeitungseinrichtung 3 oder durch die Systemsteuerung 21, wenn diese erkannt bzw. mitgeteilt bekommen hat, dass die Bearbeitungseinrichtung 3 bzw. deren Fördereinrichtung 8 freigefahren worden ist.

Es ist anzumerken, dass die Fördereinrichtungen 8 der Bearbeitungseinrichtungen 3 insbesondere auch mehrere Linsen 2 bzw. Linsenträger 5 mit Linsen 2 bedarfsweise (gleichzeitig) aufnehmen können. Der Begriff "Freifahren" ist dann dementsprechend dahingehend zu verstehen, dass die jeweilige Bearbeitungseinrichtung 3 bzw. deren Fördereinrichtung 8 zur Aufnahme einer Linse 2 bzw. eines Linsenträgers 5 bereit ist, selbst wenn sich noch eine oder mehrere Linsen 2 bzw. Linsenträger 5 in der Bearbeitungseinrichtung 3 bzw. deren Fördereinrichtung 8 befinden.

Das System 1 bzw. die Bearbeitungseinrichtungen 3 bildet bzw. bilden vorzugsweise eine Bearbeitungslinie B, insbesondere zusammen mit der Transfereinrichtung 4, um die Linsen 2 zu bearbeiten. Die Bearbeitungslinie B verläuft insbesondere geradlinig, kann aber auch eine beliebige andere Anordnung, insbesondere je nach Bildung der Transportspuren T bzw. Gestaltung des Transfersystems 4 aufweisen. Insbesondere ist beispielsweise eine Anordnung über Eck, wie in Fig. 1 angedeutet, möglich.

Fig. 2 zeigt in einer schematischen Draufsicht eine bevorzugte Ausführungsform eines Linsenträgers 5 zur Aufnahme von mindestens einer, beim Darstellungsbeispiel insbesondere zwei oder mehr zu bearbeitenden Linsen 2. Bei der Linsenbearbeitung bzw. Brillenglasbearbeitung werden üblicherweise zwei zu bearbeitende Linsen 2 bzw. ein Linsenpaar von einem Linsenträger 5 aufgenommen. Dies ist auch hier bevorzugt.

Der Linsenträger 5 weist vorzugsweise eine Kodierung 5A, beispielsweise einen Barcode oder dgl., mit wichtigen Bearbeitungsdaten, Daten zur Identifikation und/oder sonstigen Informationen für beide Linsen 2 oder für jede Linse 2 eine separate Kodierung 5A, wie in Fig. 2 angedeutet, auf. Besonders bevorzugt enthält die Kodierung 5A eine Identifikation oder Auftragsnummer oder dergleichen für die jeweilige Linse(n) 2, so dass mittels der Identifikation bzw. Auftragsnummer ein Bearbeitungsplan und/oder Bearbeitungsstatus bzw. erforderliche Bearbeitungsschritte, Bearbeitungsreihenfolgen, Bearbeitungsdaten und/oder sonstige Informationen, beispielsweise über ein entsprechendes Serversystem, Datenbanksystem oder dergleichen, insbesondere eine Systemsteuerung 21, wie in Fig. 1 angedeutet, bestimmbar oder davon abrufbar sind.

Generell ist anzumerken, dass auch eine blockstückfreie Bearbeitung erfolgen kann. Beim Darstellungsbeispiel wird jedoch bevorzugt oder zumindest derzeit noch die jeweilige Linse 2 temporär mit einem zugeordneten Halter bzw. Blockstück (nicht dargestellt) insbesondere in der Bearbeitungseinrichtung 3A verbunden. Mittels dieses Halters bzw. Blockstücks wird die jeweilige Linse 2 dann vorzugsweise bei weiteren Bearbeitungen bzw. in anderen Bearbeitungseinrichtungen 3 jeweils gehalten bzw. positioniert.

Nachfolgend werden anhand der weiteren Figuren zunächst weitere Ausführungsbeispiele des vorschlagsgemäßen Systems 1 erläutert. Hierbei wird jeweils insbesondere auf wesentliche Unterschiede und neue Aspekte näher eingegangen, so dass die bisherigen Ausführungen und Erläuterungen insbesondere entsprechend oder ergänzend gelten, auch wenn eine diesbezügliche Wiederholung weggelassen ist.

Fig. 3 zeigt in einer schematischen Darstellung ein weiteres Ausführungsbeispiel des vorschlagsgemäßen Systems 1. Bei diesem Ausführungsbeispiel wird vorzugsweise eine Ringanordnung bzw. zumindest im Wesentlichen U-förmige Anordnung, insbesondere der ersten oder zweiten Transportspur T1 bzw. T2 gebildet.

Vorzugsweise sind zwei Gruppen oder Reihen von Bearbeitungseinrichtungen 3, hier beispielsweise eine erste Gruppe von Bearbeitungseinrichtungen 3A, 3B und 3C und eine zweite Gruppe von Bearbeitungseinrichtungen 3D, 3E und 3F, einander gegenüberliegend und/oder mit auf einander zugewandten Seiten angeordneten Fördereinrichtungen 8 gebildet oder angeordnet und/oder derart angeordnet, dass die zugeordneten Transportspuren T1 und/oder T2 der beiden Gruppen vorzugsweise parallel zueinander verlaufen.

Vorzugsweise weist das System 1 bzw. Transfersystem 4 entsprechende Querverbindungen der beiden Gruppen von Bearbeitungseinrichtungen 3 über eine Fördereinrichtung 14 und/oder 15 auf.

Vorzugsweise bildet die Fördereinrichtung 14 einen Schenkel oder Abschnitt der vorzugsweise zumindest im Wesentlichen U-förmigen Anordnung oder einen Teil des vorzugsweise im Wesentlichen U-förmigen Verlaufs der ersten oder zweiten Transportspur T1 bzw. T2, hier der zweiten Transportspur T2. Bedarfsweise können an diesem Abschnitt auch eine oder mehrere Bearbeitungseinrichtungen 3 angeordnet sein.

Vorzugsweise weist das System 1 bzw. Transfersystem 4 eine Rückförderverbindung 16 auf.

Vorzugsweise weist die Rückförderverbindung 16 die Fördereinrichtung 15 auf bzw. wird dadurch gebildet.

Vorzugsweise ist bei dem dargestellten Ausführungsbeispiel eine Zirkulation bzw. Kreisförderung K, besonders bevorzugt über die erste oder zweite Transportspur T1 bzw. T2 möglich. Beim Ausführungsbeispiel ist hierzu die Rückförderverbindung 16 für die erste oder zweite Transportspur T1 bzw. T2 (beim Darstellungsbeispiel nur für die zweite Transportspur T2) vorgesehen. Hier ermöglicht die Rückförderverbindung 16 eine Rückförderung in die Rückförderrichtung FR, so dass die Kreisförderung K der Linsen 2 bzw. Linsenträger 5 über die zweite Transportspur T2 ohne Umkehr der Förderrichtung F2 und ohne Wechsel in die entgegengesetzte Förderrichtung F3 ermöglicht wird.

Beim dargestellten Ausführungsbeispiel weist das System 1 bzw. das Transfersystem 4 vorzugsweise eine Aufnahme 7 und/oder Abgabe 6 bzw. entsprechende Fördereinrichtungen 10 (in Fig. 3 gestrichelt auf der linken Seite angedeutet) als Einlauf- und/oder Auslaufstrecke für Linsen 2 bzw. Linsenträger 5 auf.

Die Rückförderverbindung 16 bzw. Fördereinrichtung 15 ist besonders bevorzugt im Bereich des Anfangs und/oder Endes der Transportspur T1 bzw. T2 und/oder der üblichen Bearbeitung und/oder im Bereich der Aufnahme 7 bzw. Abgabe 6 angeordnet. Besonders bevorzugt ist die Rückförderverbindung 16 bzw. Fördereinrichtung 14 über entsprechende Weichen angeschlossen. Jedoch sind auch andere konstruktive Lösungen und/oder Anordnungen möglich, insbesondere je nach Lage und Ausbildung bzw. Anordnung der Aufnahme 7 und/oder Abgabe 6.

Bei dem Ausführungsbeispiel gemäß Fig. 3 gestattet die Rückförderverbindung 16 die Kreisförderung K bzw. Zirkulation der Linsen 2 bzw. Linsenträger 5. Dementsprechend ist eine dritte Transportspur T3 zur Rückförderung bzw. Zirkulation nicht erforderlich. Jedoch können die Rückförderverbindung 16 und die dritte Transportspur T3 bedarfsweise auch kombiniert oder ergänzend eingesetzt werden, insbesondere je nach baulichen Gegebenheiten und/oder vorhandenen Bearbeitungseinrichtungen 3.

Die Rückförderverbindung 16 kann bei Bedarf auch an einer anderen Stelle angeordnet sein bzw. nur einen Kreislauf für einige der Bearbeitungseinrichtungen 3 bilden, beispielsweise einerseits zwischen der Bearbeitungseinrichtung 3B und 3C und andererseits zwischen der Bearbeitungseinrichtung 3D und 3E angeschlossen sein, je nach Bedarf also auch einen kürzeren oder kleineren Kreislauf bilden oder ermöglichen.

Bedarfsweise können auch mehrere derartige Querverbindungen bzw. Rückförderverbindungen 16 vorgesehen sein oder werden. Hierdurch können bedarfsweise auch zusätzliche Speicherstrecken gebildet werden.

Vorzugsweise weist das System 1 bzw. das Transfersystem 4 Fördereinrichtungen 18 zur Kurvenförderung auf, insbesondere um gerade Abschnitte der jeweiligen Transportspur, hier T2, und/oder verschiedene Fördereinrichtungen 10, 14 und/oder 15 und/oder die Rückförderverbindung 16 mit der Transportspur T2 zu verbinden. Durch die Kurvenförderung kann erreicht werden, dass die Ausrichtung der Linsen 2 bzw. Linsenträger 5 bezüglich der jeweiligen Förderrichtung F gleichbleibt also beispielsweise bei einem Linsenträger 5 mit zwei Linsen 2 immer die selbe Linse 2 vorne ist.

Die beiden Gruppen von Bearbeitungseinrichtungen 3 bzw. die beiden Schenkel der besonders bevorzugt U-förmigen Anordnung sind beim Darstellungsbeispiel vorzugsweise relativ nah beieinander angeordnet und/oder derart beabstandet, dass der Zwischenraum eine Zugangsmöglichkeit für einen nicht dargestellten Bediener bildet. Insbesondere sind hierzu die Querverbindungen bzw. Fördereinrichtungen 14 und/oder 15 derart ausgebildet, dass diese bei Bedarf gelöst oder geöffnet oder weggeklappt werden können. Alternativ oder zusätzlich können diese auch höher oder tiefer gelegt und beispielsweise über entsprechende Vertikalförderer oder Gefällestrecken angeschlossen sein, so dass ein vorzugsweise freier Zugang zu dem Zwischenraum ermöglicht wird.

Alternativ oder zusätzlich kann der Zwischenraum auch für Betriebsmittelbehälter für Bearbeitungseinrichtungen 3 genutzt werden, beispielsweise für einen Kühlmittelbehälter, einen Behälter für Späne, einen Behälter für Kühlflüssigkeit oder dergleichen. Die Behälter können insbesondere im Zwischenraum und/oder unterhalb des Transfersystems 4, besonders bevorzugt unterhalb der zweiten Transportspur T2 angeordnet sein.

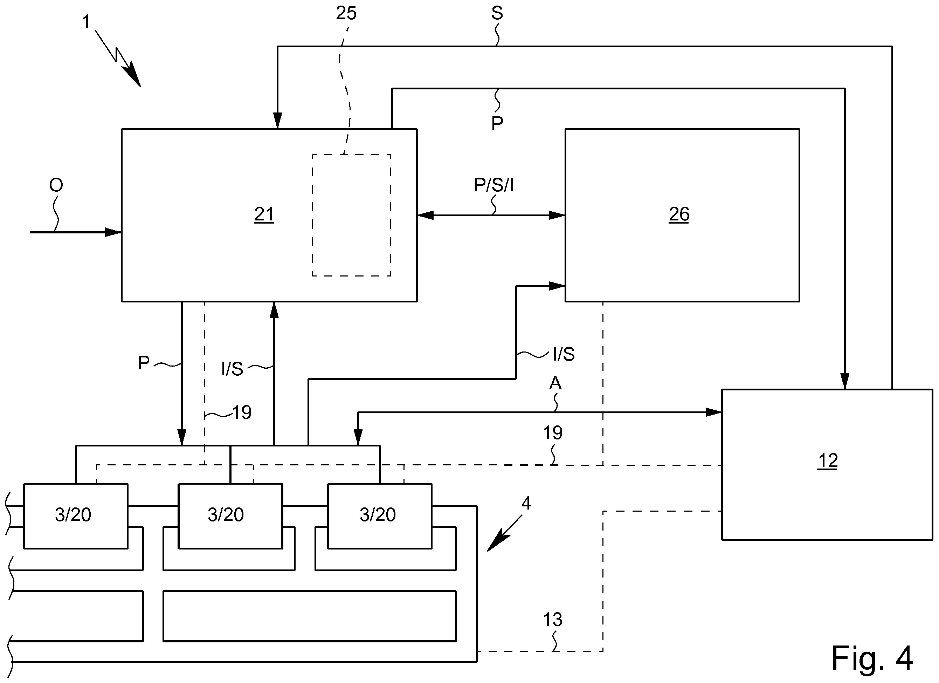

Fig. 4 zeigt in einer sehr schematischen Darstellung ein Blockschaltbild eines bevorzugten Steuerungsaufbaus eines vorschlagsgemäßen Systems 1.

Wie bereits erwähnt, weist das System 1 bzw. das Transfersystem 4 vorzugsweise die insbesondere zentrale Transfer- bzw. Steuereinrichtung 12 auf. Hierbei handelt es sich insbesondere um einen sogenannten Band-Leitrechner. Bedarfsweise kann es sich auch um ein Programm und/oder mehrere vernetzte Computer, Rechner, Steuerungen o. dgl. handeln.

Die Transfer- bzw. Steuereinrichtung 12 dient insbesondere der Steuerung des Produktionsflusses bzw. der Förderung der Linsen 2 bzw. Linsenträger 5, wie der Zirkulation bzw. Kreisförderung K und/oder Förderung von Linsen 2 bzw. Linsenträgern 5 zu Bearbeitungseinrichtungen 3 und von diesen weg.

Besonders bevorzugt steuert die Steuereinrichtung 12 die Transfereinrichtungen 9, Fördereinrichtungen 10 (und optional 14 und 15, wenn vorhanden) und/oder Wechseleinrichtungen 11, wobei die Transfereinrichtungen 9 vorzugsweise ergänzend oder alternativ auch von den Bearbeitungseinrichtungen 3 bzw. deren Maschinensteuerung 20 - insbesondere bei Anschluss an das Bussystem 13 - (direkt) gesteuert werden können.

Die Anlagen- bzw. Systemsteuerung 21 ist vorzugsweise über das (weitere) Bussystem 19 mit den Bearbeitungseinrichtungen 3 bzw. deren Maschinensteuerungen 20 gekoppelt oder verbunden. Jedoch sind hier auch andere Arten der Verbindung möglich.

Die Steuereinrichtung 12 kann mit der Systemsteuerung 21 ebenfalls über das Bussystem 19 oder eine separate Verbindung zum Datenaustausch verbunden sein.

Optional kann die Steuereinrichtung 12 auch von der Systemsteuerung 21 gebildet oder in diese integriert sein.

Die Systemsteuerung 21 bildet vorzugsweise ein Linsenmanagementsystem und/oder eine Anlagensteuerung.

Die Systemsteuerung 21 dient insbesondere der Annahme oder Erfassung von Aufträgen O und/oder der Verwaltung von Aufträgen O, Produktionsdaten P und/oder Linsenrohlingen und/oder der Bereitstellung von Schnittstellen zu anderen Systemen, beispielsweise zu Systemen oder Modulen für das Linsendesign, die insbesondere in Abhängigkeit von gewünschten optischen Eigenschaften die gewünschte geometrische Gestalt von Linsen 2 und/oder die erforderlichen Bearbeitungen bzw. Bearbeitungsschritte bestimmen.

Insbesondere werden in der Systemsteuerung 21 (oder einem sonstigen Server oder Datenspeicher) Produktionsdaten P, die insbesondere Bearbeitungspläne (Bearbeitungsschritte und/oder -reihenfolgen oder -abfolgen) und Bearbeitungsstatus (Bearbeitungszustände bzw. Informationen über als nächstes auszuführende Bearbeitungen) beinhalten, verwaltet und/oder erzeugt.

Die Produktionsdaten P werden insbesondere von der Systemsteuerung 21 den Bearbeitungseinrichtungen 3 bzw. deren Maschinensteuerungen 20 zur Verfügung gestellt und/oder können von diesen abgefragt werden, wie durch einen entsprechenden Pfeil schematisch angedeutet.

Das System 1 bzw. die Systemsteuerung 21 weist vorzugsweise ein internes Kontrollcenter 25 und/oder ein externes Kontrollcenter 26 auf.

Die Systemsteuerung 21 bzw. deren Kontrollcenter 25 oder 26 dient vorzugsweise einer Erfassung, Verwaltung, Protokollierung, Planung, Steuerung und/oder Ausgabe bzw. Anzeige von Instandhaltungen, insbesondere von anstehenden oder zu erwartenden Instandhaltungen und/oder damit verbundenen Ausfallzeiten, von einzelnen oder mehreren, insbesondere allen angeschlossenen Bearbeitungseinrichtungen 3 bzw. Bearbeitungslinien B.

Der Status der Bearbeitungseinrichtungen 3, insbesondere der Bearbeitungsstatus bzw. Produktionsstatus, die Verfügbarkeit der jeweiligen Bearbeitungseinrichtung 3, die Befähigung bzw. Werkzeugausstattung, die möglichen Bearbeitungen und/oder sonstige ähnliche Informationen, insbesondere durchgeführte Instandhaltungen, werden als Statusinformationen S von den Bearbeitungseinrichtungen 3 bzw. deren Maschinensteuerung 20 insbesondere an die Systemsteuerung 21, wie durch einen entsprechenden Pfeil in Fig. 4 angedeutet, und/oder an das Kontrollcenter 25 bzw. 26 zur Anzeige und/oder Verwaltung übermittelt.

Das Kontrollcenter 25 bzw. 26 dient insbesondere der Visualisierung und/oder Verwaltung von anstehenden, insbesondere schon geplanten bzw. terminierten, oder zu erwartenden Instandhaltungen bzw. damit verbundenen Ausfallzeiten sowie von Maschinenzuständen, also Zuständen der Bearbeitungseinrichtungen 3, Produktionsdaten P, Prozessdaten und/oder sonstiger Informationen I.

Weiter dient das Kontrollcenter 25 bzw. 26 vorzugsweise der Verwaltung von Makros und/oder dem Berichtswesen.

Bei dem Kontrollcenter 25 bzw. 26 kann es sich um entsprechende Programme, Anwendungen oder dergleichen und/oder um einen oder mehrere Rechner, wie einen Server oder dergleichen, handeln. Entsprechendes gilt auch für die Systemsteuerung 21 und/oder Steuereinrichtung 12.

Optional kann das Kontrollcenter 26 auch von der Systemsteuerung 21 gebildet und/oder (nur) über diese an das System 1 angeschlossen sein.

Die Bearbeitungseinrichtungen 3 bzw. deren Maschinensteuerungen 20 können vorzugsweise auch Informationen I, wie Prozessdaten u. dgl., dem Kontrollcenter 25 bzw. 26 mitteilen, wie durch einen entsprechenden Pfeil angedeutet.

Zum Informations- bzw. Datenaustausch kann das Kontrollcenter 25 bzw. 26 auch an das Bussystem 19 angeschlossen sein. Alternativ oder zusätzlich kann der Datenaustausch auch über die Systemsteuerung 21 erfolgen.

Vorzugsweise können die Systemsteuerung 21 und das Kontrollcenter 25 bzw. 26 Produktionsdaten P und/oder sonstige Daten, wie Statusinformationen S, beispielsweise zum Auftragsstatus, wie durch Pfeil P/S/I in Fig. 4 angedeutet, austauschen.

Vorzugsweise können die Systemsteuerung 21 und die Steuereinrichtung 12 Produktionsdaten P, wie durch einen entsprechenden Pfeil angedeutet, und/oder Statusinformationen S, insbesondere Daten zum Auftragsstatus, wie durch einen entsprechenden Pfeil A angedeutet, austauschen und/oder abgleichen.

Zum Datenaustausch ist die Steuereinrichtung 12 vorzugsweise auch an das weitere Bussystem 19 und/oder auf sonstige Weise angeschlossen bzw. zum Datenaustausch verbunden oder verbindbar.

Vorzugsweise können die Bearbeitungseinrichtungen 3 bzw. deren Maschinensteuerungen 20 Auftragsinformationen A sowie Informationen zum Status, insbesondere Auftragsstatus, Anfragen und/oder Anforderungen, wie durch einen entsprechenden Pfeil in Fig. 4 angedeutet, austauschen. Besonders bevorzugt können Anfragen und Auftragsinformationen A an die Steuereinrichtung 12 übermittelt bzw. dieser mitgeteilt und/oder eine Anforderung einer Linse 2 bzw. eines Linsenträgers 5 an die Steuereinrichtung 12 übermittelt werden. Alternativ oder zusätzlich können Informationen über vorzugsweise von Sensoren erfasste oder identifizierte Linsen 2 bzw. Linsenträger 5 von Sensoren direkt oder über die Steuereinrichtung 12 an einzelne, mehrere oder alle Bearbeitungseinrichtungen 3 bzw. deren Maschinensteuerung 20 übermittelt oder diesen bereitgestellt werden. Dieser Informationsaustausch erfolgt insbesondere im Rahmen der Anforderung von neuen Linsen 2 bzw. Linsenträgern 5 durch die Bearbeitungseinrichtungen 3, wie durch den Doppelpfeil A in Fig. 4 angedeutet. Dieser Informationsaustausch kann auch unter Berücksichtigung von weiteren Daten oder Informationen, insbesondere von Prozessdaten P, besonders bevorzugt Bearbeitungsplänen und Bearbeitungsstatus, die vorzugsweise durch die Systemsteuerung 21 bereitgestellt werden, erfolgen.

Insbesondere können die Bearbeitungseinrichtungen 3 vorzugsweise selbstständig neue Aufträge bzw. Linsen 2 zur Bearbeitung auswählen und/oder anfordern. Dies ermöglicht gemäß einem besonders bevorzugten Aspekt ein quasi beliebiges bzw. unabhängiges Einklinken bzw. Einfügen von Bearbeitungseinrichtungen 3 in das System 1.

Das vorschlagsgemäße System 1 und Verfahren zur Bearbeitung optischer Linsen 2 ist sehr flexibel. Insbesondere kann eine verbesserte oder optimierte Ausnutzung von Bearbeitungskapazitäten erreicht werden. Des Weiteren wird eine sehr flexible Bearbeitung und Anpassung an verschiedene Gegebenheiten ermöglicht. Beispielsweise können Stillstandzeiten oder Ausfälle einzelner Bearbeitungseinrichtungen 3 sehr leicht und/oder in optimaler Weise kompensiert werden, insbesondere sofern andere oder alternative Bearbeitungseinrichtungen 3 zur Verfügung stehen. Alternativ oder zusätzlich kann eine intelligente Schwerpunktsteuerung erfolgen, beispielsweise dahingehend, dass eine für eine bestimmte Bearbeitung besonders geeignete Bearbeitungseinrichtung 3 primär für diese Bearbeitung eingesetzt wird, also beispielsweise eine Drehmaschine mit einem besonders großen Spannraum zur Bearbeitung von besonders lange oder sperrige Späne bei der Bearbeitung erzeugenden Linsen 2.

Das vorschlagsgemäße System 1 und Verfahren erlauben insbesondere eine sehr große Flexibilität auch bei der Bearbeitung von Linsen 2 mit unterschiedlichen Formen und/oder aus unterschiedlichen Materialien. Insbesondere können die bisher üblichen Bearbeitungs- oder Fertigungslinien vermieden werden, die primär auf die Bearbeitung von Linsen 2 aus einem bestimmten Material oder von Linsen 2 einer bestimmten Form ausgerichtet sind.

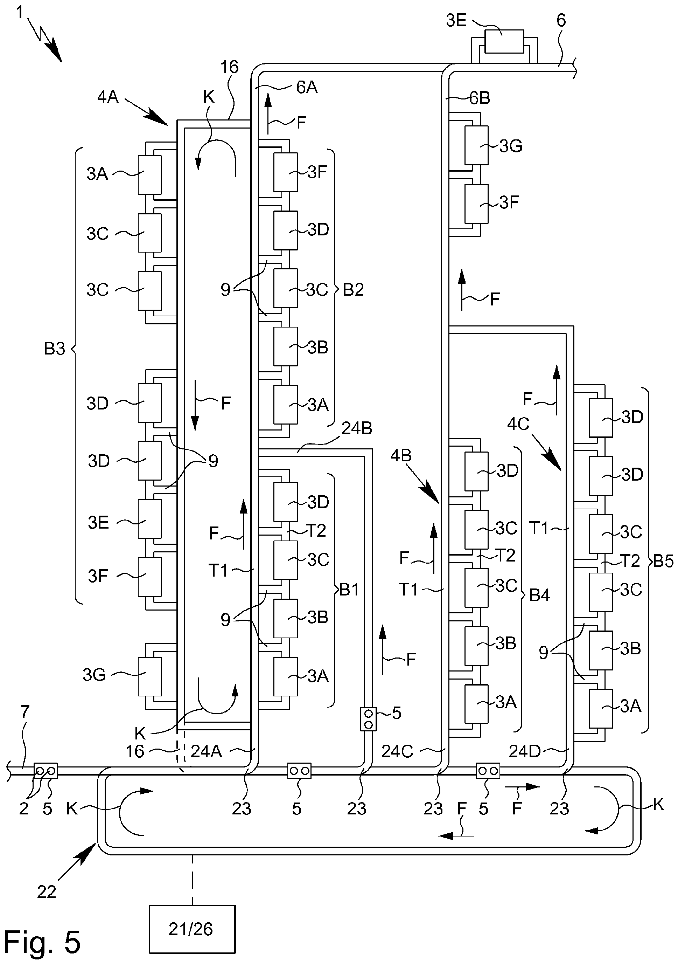

Eine weitere Ausführungsform des vorschlagsgemäßen Systems 1 wird nachfolgend anhand von Fig. 5 erklärt, wobei primär nur auf wesentliche Unterschiede bzw. neue Aspekte näher eingegangen wird, so dass die bisherigen Ausführungen und Erläuterungen insbesondere entsprechend oder ergänzend gelten, auch wenn eine diesbezügliche Wiederholung weggelassen ist.

Bei der Ausführung gemäß Fig. 5 weist das vorschlagsgemäße System 1 vorzugsweise ein insbesondere vorgeordnetes oder zentrales Transportsystem 22 und mehrere daran angeschlossene Bearbeitungslinien B, hier die Bearbeitungslinien B1 bis B5, auf.

Mehrere oder alle Bearbeitungslinien B weisen jeweils mehrere verschiedene und/oder gleichartige Bearbeitungseinrichtungen 3 auf, wie beispielhaft in Fig. 5 angedeutet, insbesondere unterschiedliche Bearbeitungseinrichtungen 3A bis 3G im bereits verwendeten Sinne. Beispielsweise weist die Bearbeitungslinie B3 oder B5 mehrere Bearbeitungseinrichtungen 3 auf, wobei mindestens zwei Bearbeitungseinrichtungen 3, hier zwei Bearbeitungseinrichtungen 3C zum formgebenden Bearbeiten, beispielsweise durch Fräsen und/oder Drehen, und/oder zwei Bearbeitungseinrichtungen 3D zum Polieren, gleich oder gleichartig bzw. zur gleichen Bearbeitung ausgebildet sind.

Den Bearbeitungseinrichtungen 3 der Bearbeitungslinien B werden die Linsen 2 bzw. Linsenträger 5 über entsprechende Transfersysteme 4A, 4B und 4C, die insbesondere jeweils ein Transfersystem 4 in bereits beschriebenem Sinne darstellen, zugefördert und von diesem bzw. diesen wieder weggefördert.

Insbesondere kann das Transfersystem 4 bzw. hier beim Darstellungsbeispiel das Transfersystem 4A mehreren Bearbeitungslinien B, hier den Bearbeitungslinien B1, B2 und B3, zugeordnet sein und/oder eine Ringanordnung bzw. Ringförderung oder Kreisförderung K bilden.

Alternativ oder zusätzlich kann jedem Transfer(sub)system 4 auch nur eine Bearbeitungslinie B zugeordnet sein. Beim Darstellungsbeispiel ist dem Transfersystem 4B (nur) die Bearbeitungslinie B4 und dem Transfersystem 4C (nur) die Bearbeitungslinie B5 zugeordnet.

Besonders bevorzugt weist die jeweilige Bearbeitungslinie B also auch ein zugeordnetes Transfer(sub)system 4 bzw. und/oder vorgeordnetes Transportsystem 22 auf.

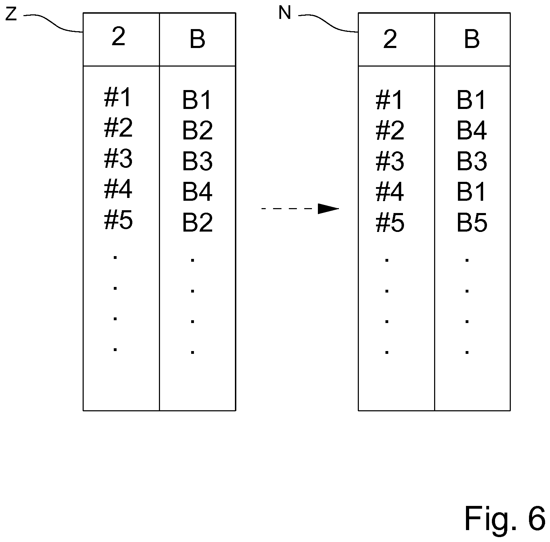

Das Transportsystem 22 ist den Bearbeitungslinien B bzw. Transfersystemen 4 vorgeordnet, um die zu bearbeitenden Linsen 2 bzw. damit versehenen Träger 5 diesen - also den Bearbeitungslinien B und/oder Transfersystemen 4 - wahlweise bzw. bedarfsgerecht zuzufördern. Diese Zuförderung folgt insbesondere gemäß einer Zuordnung Z, wie beispielhaft in Fig. 6 angedeutet.

Besonders bevorzugt sind einige oder alle Bearbeitungslinien B und/oder Transfersysteme 4 über einen oder mehrere Abzweige 23 und Zuläufe 24, insbesondere über einen Abzweig 23 und einen eigenen Zulauf 24, an das Transportsystem 22 angeschlossen, so dass einzelnen, mehreren oder allen Bearbeitungslinien B vorzugsweise separat und/oder direkt die zu bearbeitenden Linsen 2 bzw. damit versehene Träger 5 zuförderbar sind.

Bei der in Fig. 5 dargestellten Ausführungsform sind beispielsweise die Bearbeitungslinien B1, B2 und B3 bzw. das Transfersystem 4A über einen Abzweig 23 und den Zulauf 24A sowie über einen weiteren Abzweig 23 und den Zulauf 24B an das Transportsystem 22 angeschlossen. Beispielsweise ist hier über den Zulauf 24A die Bearbeitungslinie B1 und über den Zulauf 24B die Bearbeitungslinie B2 jeweils direkt mit zu bearbeitenden Linsen 2 versorgbar. Diese direkte Zuförderung bzw. Versorgung von Bearbeitungslinien B ist hinsichtlich eines optimierten Ablaufs und/oder einer besonders guten Systemauslastung vorteilhaft und stellt einen besonders bevorzugten, auch unabhängig realisierbaren Aspekt der vorliegenden Erfindung dar.

Weiter ist es aber auch möglich, dass Bearbeitungslinien B nur indirekt angeschlossen sind bzw. mit zu bearbeitenden Linsen 2 versorgt werden. Beispielsweise ist hier die Bearbeitungslinien B3 indirekt über die anderen Bearbeitungslinien B1, B2 bzw. das zugeordnete Transfersystem 4A angeschlossen, verfügt also über keinen eigenen bzw. separaten Zulauf 24.

Die Bearbeitungslinie B bzw. mehrere Bearbeitungslinien B, hier die Bearbeitungslinien B1, B2 und B3 bzw. deren Transfersystem 4A, bildet bzw. bilden vorzugsweise eine Ringanordnung und/oder gestattet bzw. gestatten eine Kreisförderung K, wie bereits bei anderen Ausführungsformen beschrieben und wie in Fig. 5 angedeutet.

Eine Ringanordnung bzw. Kreisförderung K ist jedoch nicht unbedingt erforderlich, auch wenn diese vorteilhaft und/oder bevorzugt ist. Beispielsweise bilden jeweils die Transfersysteme 4B und 4C mit den zugeordneten Bearbeitungslinien B4 und B5 keine Ringanordnung oder Kreisförderung K, sondern sonstige, hier insbesondere lineare oder gradlinige Anordnungen, die beispielsweise nebeneinander oder hintereinander angeordnet sein können.

Einige oder alle Bearbeitungslinien B bzw. Transfersysteme 4 können die bearbeiteten Linsen 2 vorzugsweise an separate und/oder gemeinsame Abgaben 6, 6A und 6B, wie beispielhaft in Fig. 5 angedeutet, aus- bzw. abgeben.

Alternativ oder zusätzlich können einzelne Bearbeitungseinrichtungen 3 einzelnen oder mehreren Bearbeitungslinien B bzw. Transfersystemen 4 vorgeordnet und/oder nachgeordnet sein, wie in Fig. 5 beispielhaft angedeutet. Zum Beispiel sind den beiden Bearbeitungslinien B4 und B5 bzw. den beiden Transfersystemen 4B und 4C die gemeinsam nutzbaren Bearbeitungseinrichtungen 3F und 3G - hier im Bereich der Abgabe 6B - nachgeordnet, die bedarfsweise bzw. wahlweise benutzt werden können. Weiter ist den Bearbeitungslinien B4, B5 zusätzlich zusammen mit den Bearbeitungslinien B1 bis B3 bzw. den Transfersystemen 4B, 4C zusätzlich zusammen mit dem Transfersystem 4A die gemeinsame Bearbeitungseinrichtung 3E im Bereich der Abgabe 6 nachgeordnet, die wiederum wahlweise bzw. bedarfsweise benutzt, aber auch ausgelassen bzw. umfahren werden kann.

Das Transportsystem 22 bildet vorzugsweise auch eine Ringanordnung und/oder ermöglicht vorzugsweise eine Zirkulation oder Kreisförderung K, wie in Fig. 5 angedeutet. Dies ist insbesondere einer Zwischenspeicherung der zu bearbeitenden Linsen 2 und/oder deren wahlweiser Zuförderung zu einer gewünschten Bearbeitungslinie B und/oder einem gewünschten Transfersystem 4 zuträglich, wobei ein einfacher und/oder kompakter Aufbau ermöglicht wird.

Die bevorzugte Kombination von mindestens einer Ringanordnung oder Zirkulation bzw. Kreisförderung K des (vorgeordneten) Transportsystems 22 mit mindestens einer (nachgeordneten) Ringanordnung oder Zirkulation bzw. Kreisförderung K einer Bearbeitungslinie B oder eines Transfersystems 4 stellt einen besonders bevorzugten, insbesondere unabhängig realisierbaren Aspekt der vorliegenden Erfindung dar. So lässt sich nämlich auf einfache Weise eine Zwischenspeicherung und/oder flexible Zuförderung zu verschiedenen Bearbeitungslinien B und/oder Bearbeitungseinrichtungen 3 realisieren.

Das System 1 bzw. Transportsystem 22 weist vorzugsweise eine Aufnahme 7 zur Aufnahme von zu bearbeitenden Linsen 2 bzw. damit versehenen Linsenträgern 5 auf. Die Aufnahme 7 ist vorzugsweise über einen Einlass o. dgl. an entsprechende andere Anlagen oder Einrichtungen angeschlossen oder anschließbar und/oder mit den Linsen 2 beschickbar.

Die neuen zu bearbeitenden und insbesondere bereits erfassten Linsen 2 werden in das Transportsystem 22 bzw. die bevorzugte Zirkulation oder Kreisförderung K eingeschleust.

Die Zuförderung der zu bearbeitenden Linsen 2 bzw. damit versehenen Linsenträger 5 zu der jeweiligen Bearbeitungslinie B bzw. dem jeweiligen Transfersystem 4, also insbesondere aus dem Transportsystem 22 über einen der Abzweige 23 und Zuläufe 24, erfolgt vorzugsweise in Abhängigkeit von Zuordnungsparametern und/oder entsprechend einer (vorherigen) Zuordnung Z, wie beispielhaft in Fig. 6 gezeigt. Insbesondere erfolgt die Zuordnung Z in Abhängigkeit von den Zuordnungsparametern.

Vorzugsweise gibt die Zuordnung Z beim Darstellungsbeispiel an, welche Linse 2 (bei der Darstellung gemäß Fig. 6 beispielhaft identifiziert durch eine Linsennummer #1, #2, #3, usw.) welcher Bearbeitungslinie B zugeordnet wird und dementsprechend dieser zugefördert werden soll.

Die Zuordnung Z kann insbesondere durch eine Tabelle, eine Datenbank oder einen sonstigen Speicherwert oder Eintrag oder dergleichen realisiert werden.

Die Zuordnung Z kann einzelweise, paarweise oder gruppenweise erfolgen, wobei die üblicherweise als Paare herzustellenden Linsen 2 besonders bevorzugt auch als Paar der gleichen Bearbeitungslinie B zugeordnet und als zu bearbeitende Linsen 2 zugefördert werden.

Die Zuordnung Z kann für die Linsen 2 einzelweise, paarweise oder zusammengefasst für mehrere oder alle Linsen 2, insbesondere für alle, die bereits erfasst wurden und einer der Bearbeitungslinien B noch zugefördert werden müssen und/oder sich noch im Transportsystem 22 befinden, bestimmt, bereitgehalten oder verwaltet werden, insbesondere von der Systemsteuerung 21 bzw. deren Kontrollcenter 25 oder 26.

Die Zuordnungsparameter berücksichtigen, bilden ab und/oder umfassen insbesondere die anstehenden oder zu erwartenden Instandhaltungen und/oder damit verbundene Ausfallzeiten sowie Auftragsinformationen A, Produktionsdaten P und/oder Statusinformationen S, besonders bevorzugt den jeweiligen Bearbeitungsplan, erforderliche Bearbeitungsschritte, erforderliche Bearbeitungsgenauigkeiten, Anforderungen hinsichtlich der zu bearbeitenden Dimensionen und/oder des zu bearbeitenden Materials, Anforderungen bezüglich erforderlicher Werkzeuge, Wertelisten, Vorrang (Priorität) von Aufträgen, Bearbeitungen und/oder Linsen 2 und/oder die Verfügbarkeit bzw. Befähigung einzelner Bearbeitungslinien B, Transfersysteme 4 und/oder Bearbeitungseinrichtungen 3. Beispielsweise kann eine Bearbeitungseinrichtung 3A einer Bearbeitungslinie B zum Blocken auf eine bestimmte Größe eingestellt sein und eine Bearbeitungseinrichtung 3A einer anderen Bearbeitungslinie B zum Blocken auf eine andere Größe eingerichtet sein. Die Linsen 2 werden dann unter Berücksichtigung solcher Anforderungen bzw. Zuordnungsparameter den geeigneten Bearbeitungslinien B zugeordnet und insbesondere auch zugefördert.

Die (erste) Zuordnung Z erfolgt vorzugsweise durch eine vorgegebene Verteilung oder Zufallsverteilung, durch entsprechende Anforderung einer Bearbeitungslinie B oder durch die Systemsteuerung 21, wobei die Zuordnung Z vorzugsweise mittels des Kontrollcenters 25 bzw. 26 anzeigbar, überprüfbar und/oder änderbar ist.

Vorzugsweise beginnt das Transportsystem 22 bzw. das System 1 mit der Zuförderung der Linse 2 zur jeweils zugeordneten Bearbeitungslinie B. Diese Zuförderung bedarf gerade bei größeren Systemen 1 einer nicht vernachlässigbaren Zuförderungszeit.

Gemäß einem besonders bevorzugten, auch unabhängig realisierbaren Aspekt der vorliegenden Erfindung wird die Zuordnung Z bereits zugeordneter Linsen 2 bei Erfassung oder Festlegung einer neuen Instandhaltung und/oder vor tatsächlicher Ausschleusung oder Übergabe einer Linse 2 von dem Transportsystem 22 an die zugeordnete Bearbeitungslinie B (insbesondere also vor dem jeweiligen Abzweig 23) überprüft, und zwar insbesondere unter Berücksichtigung der aktuellen Zuordnungsparameter, besonders bevorzugt unter Berücksichtigung von Änderungen der Zuordnungsparameter nach der letzten Zuordnung Z. Die Zuordnung Z wird dann gegebenenfalls geändert, also durch eine Neuzuordnung N ersetzt.

Eine Änderung der Zuordnung Z bzw. Neuzuordnung N kann beispielsweise dadurch bedingt sein, dass eine für die Bearbeitung unersetzbare Bearbeitungseinrichtung 3 einer Bearbeitungslinie B oder eine Bearbeitungslinie B generell oder ein entsprechendes Transfersystem 4 temporär oder dauerhaft, beispielsweise für eine Instandhaltung, ausgefallen oder gesperrt ist. Insbesondere können dann einzelne Linsen 2 noch anderen Bearbeitungslinien B zugeordnet werden, wie durch die Neuzuordnung N in Fig. 6 beispielhaft veranschaulicht. Beispielsweise wird hier die Linse 2 mit der Linsennummer #2 anstelle der Bearbeitungslinie B2 nun der Bearbeitungslinien B4 neu zugeordnet.

Insbesondere ist es also möglich, dass bei Stillstand, Ausfall, Nicht-Verfügbarkeit und/oder Instandhaltung einer Bearbeitungseinrichtung 3 die für diese Bearbeitungseinrichtung 3 vorgesehenen Bearbeitungen bzw. Linsen 2 von einer anderen, insbesondere gleichartigen, Bearbeitungseinrichtung 3 übernommen werden bzw. dieser zugeordnet werden.

Vorzugsweise erfolgt die Überprüfung der Zuordnung Z bereits zugeordneter Linsen 2 bzw. die Neuzuordnung N also innerhalb der Zuförderzeit für einzelne, mehrere oder alle Linsen 2.

Die vorschlagsgemäße Überprüfung und optionale Neuzuordnung N erfolgt vorzugsweise durch die Systemsteuerung 21 und/oder deren Kontrollcenter 25 oder 26 bzw. dort hinterlegte Algorithmen oder Makros.

Optional kann die Änderung und Neuzuordnung N auch durch das Kontrollcenter 25 bzw. 26 angezeigt und/oder ggf. von einer Bedienperson überprüft bzw. korrigiert oder festgelegt werden.

Die vorschlagsgemäße Überprüfung der Zuordnung Z bereits zugeordneter Linsen 2 und optionale Neuzuordnung N gestattet eine Anpassung des Systems 1 an aktuelle Gegebenheiten, insbesondere bei sich ändernden Bedingungen und Anforderungen.

Insbesondere kann die Überprüfung der Zuordnung Z und optionale Neuzuordnung N als adaptive Vorsteuerung angesehen bzw. eingesetzt werden.

Besonders hervorzuheben ist, dass eine Optimierung des Gesamtablaufs ermöglicht wird, wobei die Untereinheiten, hier die Bearbeitungslinien B, die Aufträge O bzw. Linsen 2 vorzugsweise selbstständig abarbeiten bzw. bearbeiten, also insbesondere keine Zentralsteuerung erforderlich oder vorgesehen ist, die den kompletten Produktionsablauf in jeder Ebene steuert. Dies ist einem einfachen und/oder strukturierten Aufbau und/oder einer einfachen bzw. modularen Erweiterung der System 1 zuträglich.

Bei der beschriebenen Zuordnung Z werden die Aufträge O bzw. Linsen 2 den jeweiligen Bearbeitungslinien B zugeordnet. Dementsprechend kann hier auch der Begriff "Linienzuordnung" verwendet werden.

Die vorschlagsgemäße Festlegung der Zuordnung Z unter Berücksichtigung der Zuordnungsparameter, insbesondere der anstehenden bzw. zu erwartenden Instandhaltungen bzw. damit verbundenen Ausfallzeiten, bzw. die Überprüfung der Zuordnung Z und optionale Änderung, also Neuzuordnung N kann alternativ oder zusätzlich auch bei der Zuordnung von Linsen 2 zu einzelnen Bearbeitungseinrichtungen 3 einer Bearbeitungslinie B, also auf "Maschinenebene", erfolgen. Eine solche Zuordnung Z kann auch als "Maschinenzuordnung" bezeichnet werden und wird nachfolgend beispielhaft näher erläutert.

Die Zuordnung Z von einzelnen Linsen 2 zu einer bestimmten Bearbeitungseinrichtung 3 (für die nächste Bearbeitung) erfolgt insbesondere auf entsprechende Anforderung der jeweiligen Bearbeitungseinrichtung 3, wie bereits beschrieben. Hierbei können auch entsprechende Zuordnungsparameter, wie bereits oben beschrieben berücksichtigt werden. Damit ist dann eine (erste) Zuordnung Z erfolgt.

Die vorgenannte oder eine sonstige Zuordnung Z wird vorzugsweise immer in der Systemsteuerung 21 aktualisiert bzw. verwaltet. Optional kann auch eine Anzeige und gegebenenfalls Korrektur über das in Fig. 1 nicht dargestellte, vorzugsweise aber vorgesehene Kontrollcenter 25 bzw. 26 erfolgen.

Die Zuordnung Z bereits zugeordneter Linsen 2 wird vorzugsweise nach oder vor jeder Bearbeitung einer Linse 2 und/oder vor jeder Zuförderung einer Linse 2 zu der zugeordneten Bearbeitungseinrichtung 3, beispielsweise wenn eine Bearbeitungseinrichtung B gerade eine zugeordnete Linse 2 anfordert, überprüft, insbesondere unter Berücksichtigung der dann aktuellen Zuordnungsparameter, und optional geändert bzw. durch eine Neuzuordnung N ersetzt.

Im Falle einer Neuzuordnung N könnte dann beispielsweise eine Linse 2, die bereits als nächste formgebend in der Bearbeitungseinrichtung 3C bearbeitet werden soll, nicht mehr dieser Bearbeitungseinrichtung 3C zugeordnet werden, sondern stattdessen eine andere Linse 2, die beispielsweise vorrangig bearbeitet werden soll. Alternativ oder zusätzlich könnte dann ggf. auf eine andere Bearbeitungseinrichtung 3C (sofern vorhanden) für die ursprüngliche Linse 2 ausgewichen, also dieser neu zugeordnet werden.

Vorzugsweise erfolgt die Überprüfung der Zuordnung Z bereits zugeordneter Linsen 2 und optionale Neuzuordnung N durch das System 1 bzw. Bearbeitungslinien B bzw. Steuereinrichtung 21, die insbesondere entsprechend ausgebildet ist.

Optional kann die Änderung und Neuzuordnung N auch durch das Kontrollcenter 25 bzw. 26 angezeigt und/oder ggf. von einer Bedienperson überprüft bzw. korrigiert werden.

Die vorschlagsgemäße Überprüfung der Zuordnung Z bereits zugeordneter Linsen 2 und optionale Neuzuordnung N gestattet eine Anpassung des Gesamtsystems bzw. des Systems 1 an aktuelle Gegebenheiten, insbesondere bei sich ändernden Bedingungen und Anforderungen.

Anzumerken ist, dass eine Optimierung des Gesamtablaufs ermöglicht wird, wobei die Untereinheiten, hier die Bearbeitungslinien B, die Aufträge O bzw. Linsen 2 vorzugsweise selbstständig abarbeiten bzw. bearbeiten, also insbesondere keine Zentralsteuerung erforderlich oder vorgesehen ist, die den kompletten Produktionsablauf in jeder Ebene steuert. Dies ist einem einfachen und/oder strukturierten Aufbau und/oder einer einfachen bzw. modularen Erweiterung des Systems 1 zuträglich.

Optional können einzelne oder alle Bearbeitungslinien B und/oder Transfersysteme 4 eine (gemeinsame oder separate) Rückförderverbindung 16 zum Transportsystem 22 aufweisen, so dass bei Ausfall oder Überlastung einer Bearbeitungslinie B oder einer Bearbeitungseinrichtung 3 der Bearbeitungslinie B (beispielsweise aufgrund einer anstehenden oder notwendigen bzw. gerade erfolgenden Instandhaltung oder aufgrund einer verschlechterten bzw. nicht mehr ausreichenden Bearbeitungsqualität) eine Rückförderung bzw. Wiedereinschleusung von nicht oder nicht vollständig bearbeiteten Linsen 2 möglich ist, um diese dann anderen Bearbeitungslinien B zuzuordnen und zuzufördern. Eine solche optionale Rückförderverbindung 16 ist gestrichelt in Fig. 5 angedeutet. Alternativ oder zusätzlich kann eine solche Rückförderverbindung 16 auch beispielsweise zwischen einer separaten oder gemeinsamen Abgabe 6 und dem Transportsystem 22 vorgesehen sein.

Beim Darstellungsbeispiel können die Blockeinrichtungen bzw. Bearbeitungseinrichtungen 3A der verschiedenen Bearbeitungslinien B - zumindest teilweise - unterschiedlich eingerichtet sein, beispielsweise mit Blockringen von unterschiedlichen Durchmessern oder für Blockverbindungen mit unterschiedlichem Durchmesser ausgerüstet oder eingerichtet sein. Die Linsen 2 werden dann je nach erforderlicher bzw. gewünschter Größe der Blockverbindung den jeweiligen Blockeinrichtungen bzw. Bearbeitungseinrichtungen 3A entsprechend zugeordnet und zugefördert.

Generell ist anzumerken, dass die Bearbeitungslinien B jeweils für sich und/oder zusammen mit anderen Bearbeitungslinien B eine bereits beschriebene Ringanordnung bzw. Zirkulation oder Kreisförderung K ermöglichen oder realisieren, insbesondere durch entsprechende Ausbildung des zugehörigen oder zugeordneten Transfer- oder Transportsystems 4, 22.

Die Systemsteuerung 21 ist vorzugsweise zentral bzw. an einem Standort des Systems 1 angeordnet und/oder auf mehrere Standorte oder sonstige Orte verteilt. Beispielsweise kann es sich um einen Server handeln, auf dem entsprechende Programme oder Makros laufen und auf den aus der Ferne zugegriffen werden kann.

Generell kann die Systemsteuerung 21 bedarfsweise auch ortsunabhängig von dem jeweiligen System 1 realisiert und/oder gesteuert werden. Gleiches gilt vorzugsweise auch für das optionale Kontrollcenter 25 bzw. 26.

Optional kann das System 1 auch auf mehrere Standorte oder sonstige Orte verteilt sein. Insbesondere können Bearbeitungslinien B des Systems 1 an unterschiedlichen Standorten und sonstigen Orten aufgebaut sein. Ebenfalls werden an den unterschiedlichen Standorten dann Untersysteme gebildet.

Die Steuerung der Untersysteme bzw. Bearbeitungslinien B an den unterschiedlichen Standorten erfolgt vorzugsweise über eine zentrale oder gemeinsame Systemsteuerung 21 und gegebenenfalls gemeinsame Kontrollcenter 25 bzw. 26.

Die mögliche Zuordnung Z von Aufträgen O zu unterschiedlichen Untersystemen bzw. Standorten und entsprechende Übermittlung kann auch als "Standortzuordnung" bezeichnet werden.

Besonders bevorzugt können die Maschinenzuordnung, Linienzuordnung und Standortzuordnung auch beliebig miteinander kombiniert und/oder von der selben Systemsteuerung 21 oder unterschiedlichen Systemsteuerungen 21 realisiert bzw. vorgenommen und/oder überprüft bzw. geändert oder neu zugeordnet werden.

Vorzugsweise verwaltet die Systemsteuerung 21 bzw. deren Kontrollcenter 25 oder 26 und/oder eine daran angeschlossene (nicht dargestellte) Datenbank Anweisungen zu Instandhaltungen der einzelnen Bearbeitungseinrichtungen 3. Die Anweisungen umfassen insbesondere schriftliche Anleitungen, zeichnerische Darstellungen und/oder Animationen oder Filme, um einem Techniker vor Ort, also an der jeweiligen Bearbeitungseinrichtung 3, die jeweils durchzuführende Instandhaltung zeigen, erklären bzw. beschreiben zu können.

Vorzugsweise sind die Anweisungen zu Instandhaltungen, und zwar die für die jeweilige Instandhaltung erforderlichen Anweisungen, dezentral an der jeweiligen Bearbeitungseinrichtung 3 ausgebbar, insbesondere anzeigbar. Besonders bevorzugt erfolgt die Ausgabe oder Anzeige über einen Bildschirm oder das Bedienpult 17 der jeweiligen Bearbeitungseinrichtung 3 und/oder über einen mobilen Bildschirm oder Computer, wie ein Smartphone, ein Laptop oder dergleichen. Jedoch sind auch andere technische Realisierungen zur Ausgabe möglich.

Besonders bevorzugt ermöglicht die Systemsteuerung 21 bzw. deren Kontrollcenter 25 oder 26 auch eine Verwaltung oder Organisation der für die Instandhaltungen erforderlichen Materialien, wobei Instandhaltungen insbesondere nur in Abhängigkeit von der Verfügbarkeit der erforderlichen Materialien geplant bzw. durchgeführt werden und/oder fehlende Materialien vorzugsweise selbsttätig angefordert oder ein Bediener darauf hingewiesen wird.

Das System 1 bzw. die Systemsteuerung 21 bzw. deren Kontrollcenter 25 bzw. 26 ist bzw. sind vorzugsweise zur Erfassung und Auswertung von Fehlern oder Driften der Bearbeitung(en) ausgebildet. Insbesondere erfolgt eine Messung mittels der Bearbeitungseinrichtung(en) 3E zum Prüfen bzw. Messen.

Die Auswertung der Messungen zur Erfassung von Fehlern bzw. Driften erfolgt vorzugsweise durch eine statistische Fehlerquellensuche und/oder durch intelligente bzw. automatisierte Interpretation von Fehlerbildern, um einzelne oder mehrere Bearbeitungseinrichtungen 3 oder Bearbeitungslinien B zu identifizieren, die für Fehler bzw. Driften der Bearbeitung(en) maßgeblich sind.

In Abhängigkeit von dem Ergebnis der Auswertung werden erforderliche Instandhaltungen durch die Systemsteuerung 21 bzw. Kontrollcenter 25 oder 26 eingeplant, angezeigt und/oder vorgeschlagen. Alternativ oder zusätzlich kann die Zuordnung Z - insbesondere selbsttätig - entsprechend angepasst werden, insbesondere so dass Bearbeitungseinrichtungen 3 oder Bearbeitungslinien B, die einer Instandhaltung bedürfen, nicht mehr für weitere Bearbeitungen benutzt werden oder nur noch für Bearbeitungen mit geringeren Qualitätsanforderungen.

Insbesondere werden ein Verfahren und ein System 1 zur Bearbeitung optischer Linsen 2 vorgeschlagen. Die Linsen 2 werden einzelnen Bearbeitungseinrichtungen 3 oder Bearbeitungslinien 8 entsprechend der Zuordnung Z zugefördert. Die jeweilige Zuordnung Z berücksichtigt vorzugsweise anstehende und/oder zu erwartende Instandhaltungen und sonstige Zuordnungsparameter, wie die Verfügbarkeit und Befähigung der Bearbeitungseinrichtungen 3 bzw. Bearbeitungslinien B. Die Zuordnungsparameter umfassen daher vorzugsweise auch anstehende, insbesondere schon geplante bzw. terminierte, und/oder zu erwartende Instandhaltungen bzw. damit verbundene Ausfallzeiten.

Vorzugsweise wird eine bereits erfolgte Zuordnung Z vor der tatsächlichen bzw. endgültigen Zuförderung und/oder bei Änderung der Zuordnungsparameter überprüft und optional unter Berücksichtigung der aktuellen Zuordnungsparameter entsprechend geändert, um sich aktuellen Gegebenheiten anzupassen.

Alternativ oder zusätzlich werden Aufträge O zur Linsenbearbeitung an Systeme 1 oder Bearbeitungslinien B an unterschiedlichen Standorten in Abhängigkeit von entsprechenden Zuordnungsparametern übermittelt.

Optional erfolgt eine Überprüfung und gegebenenfalls Änderung der Zuordnung Z bei Erfassung neuer Aufträge O bzw. wesentlicher Änderungen der Zuordnungsparameter. Dementsprechend wird eine besonders effiziente Bearbeitung ermöglicht.

Weiter ermöglichen das vorschlagsgemäße System 1 und die vorschlagsgemäßen Verfahren eine besonders gute Ausnutzung von verfügbaren Werkzeugen, Bearbeitungseinrichtungen 3, Bearbeitungslinien B und/oder sonstigen Betriebsmitteln.

Einzelne Aspekte und Merkmale der beschriebenen Systeme 1 sowie der beschriebenen Abläufe, Verfahren und verschiedenen Ausführungsbeispiele können auch unabhängig voneinander, aber auch in beliebiger Kombination realisiert werden.

Abschließend sei an dieser Stelle erneut Folgendes bemerkt bzw. auf folgende Definitionen hingewiesen:
Eine "Bearbeitungseinrichtung" im Sinne der vorliegenden Erfindung ist vorzugsweise eine Maschine bzw. eine ohne weitere Komponenten funktionsfähige Baugruppe. Vorzugsweise ist eine Bearbeitungseinrichtung autark bzw. kann die Bearbeitungseinrichtung selbstständig Bearbeitungen von Linsen durchführen. Besonders bevorzugt ist eine Bearbeitungseinrichtung als eigenständiges Modul ausgebildet, so dass ein System oder eine Anlage mehrere solche modulare Bearbeitungseinrichtungen aufweisen oder aus diesen aufgebaut bzw. zusammengesetzt werden kann. So ist das System bzw. die Anlage individuell an durchzuführende Arbeitsschritte, eine Anzahl an (pro Zeiteinheit) zu bearbeitenden Linsen und/oder finanzielle und/oder räumliche Anforderungen oder Möglichkeiten eines Betreibers der Anlage bzw. des Systems anpassbar bzw. individualisierbar.

Unter "Instandhaltung" ist bzw. sind erfindungsgemäß vorzugsweise die Wartung, die Inspektion, die Instandsetzung bzw. Reparatur und/oder die Verbesserung von Bearbeitungseinrichtungen zu verstehen.

Der Begriff "Instandhaltung" wird erfindungsgemäß vorzugsweise synonym für die genannten Instandhaltungsmaßnahmen (Wartung, Inspektion, Instandsetzung, Reparatur und/oder Verbesserung) verwendet bzw. soll vorzugsweise in diesem Sinne verstanden werden.

### Bezugszeichenliste

- 1: System (generell)
- 2: Linse
- 3: Bearbeitungseinrichtung (generell)
- 3A: Bearbeitungseinrichtung zum Blocken
- 3B: Bearbeitungseinrichtung zum Zwischenlagern
- 3C: Bearbeitungseinrichtung zum formgebenden Bearbeiten
- 3D: Bearbeitungseinrichtung zum Polieren
- 3E: Bearbeitungseinrichtung zum Prüfen
- 3F: Bearbeitungseinrichtung zum Markieren
- 3G: Bearbeitungseinrichtung zum Beschichten
- 4: Transfersystem
- 4A: Transfersystem
- 4B: Transfersystem
- 4C: Transfersystem
- 5: Linsenträger
- 5A: Kodierung
- 6: Abgabe
- 6A: Abgabe
- 6B: Abgabe
- 7: Aufnahme
- 8: Fördereinrichtung (Bearbeitungseinrichtung)
- 9: Transfereinrichtung
- 10: Fördereinrichtung
- 11: Wechseleinrichtung
- 12: Steuereinrichtung
- 13: Bussystem
- 14: Fördereinrichtung (Querförderung)
- 15: Fördereinrichtung (Querförderung)
- 16: Rückförderverbindung
- 17: Bedienpult
- 18: Fördereinrichtung (Kurvenförderung)
- 19: weiteres Bussystem
- 20: Maschinensteuerung
- 21: Systemsteuerung
- 22: Transportsystem
- 23: Abzweig
- 24: Zulauf (generell)
- 24A: Zulauf
- 24B: Zulauf
- 24C: Zulauf
- 24D: Zulauf
- 25: internes Kontrollcenter
- 26: externes Kontrollcenter

- A: Auftragsinformation
- B: Bearbeitungslinie (generell)
- B1: Bearbeitungslinie
- B2: Bearbeitungslinie
- B3: Bearbeitungslinie
- B4: Bearbeitungslinie
- B5: Bearbeitungslinie
- F: Förderrichtung (generell)
- F1: erste Förderrichtung
- F2: zweite Förderrichtung
- F3: dritte Förderrichtung
- FR: Rückförderrichtung
- I: Information
- K: Kreisförderung
- N: Neuzuordnung
- O: Auftrag
- P: Produktionsdaten
- S: Statusinformation
- T: Transportspur (generell)
- T1: erste Transportspur
- T2: zweite Transportspur
- T3: dritte Transportspur
- Z: Zuordnung

## Patentansprüche

1. Verfahren zur Bearbeitung optischer Linsen (2), wobei die Linsen (2) wahlweise von verschiedenen Bearbeitungseinrichtungen (3) entsprechend einer Zuordnung (Z) bearbeitet werden,
**dadurch gekennzeichnet,**
**dass** eine zentrale Verwaltung von Anweisungen zur Instandhaltung der einzelnen Bearbeitungseinrichtungen (3) erfolgt, wobei die jeweiligen Anweisungen dezentral an der jeweiligen Bearbeitungseinrichtung (3) ausgegeben werden bzw. anzeigbar sind.

2. Verfahren nach Anspruch 1, **dadurch gekennzeichnet, dass** die Ausgabe bzw. Anzeige der Anweisungen über einen Bildschirm oder ein Bedienpult (17) der jeweiligen Bearbeitungseinrichtung (3) oder über einen mobilen Bildschirm oder mobilen Computer, wie ein Smartphone oder ein Laptop, erfolgt.

3. Verfahren nach Anspruch 1 oder 2, **dadurch gekennzeichnet, dass** eine Systemsteuerung (21) selbsttätig steuert, welche Anweisungen unter Berücksichtigung der jeweiligen Bearbeitungseinrichtung (3) und der geplanten oder erforderlichen Instandhaltung ausgegeben werden bzw. anzeigbar sind.

4. Verfahren nach einem der voranstehenden Ansprüche, **dadurch gekennzeichnet, dass** eine zentrale Verwaltung von Instandhaltungsintervallen und/oder Instandhaltungsmaßnahmen erfolgt.

5. Verfahren nach einem der voranstehenden Ansprüche, **dadurch gekennzeichnet, dass** eine zentrale Verwaltung oder Bestellung von Materialien für Instandhaltungen erfolgt.

6. Verfahren nach einem der voranstehenden Ansprüche, **dadurch gekennzeichnet, dass** der Status der Bearbeitungseinrichtungen (3), insbesondere der Bearbeitungsstatus bzw. Produktionsstatus, die Verfügbarkeit der jeweiligen Bearbeitungseinrichtung (3), die Befähigung bzw. Werkzeugausstattung, die möglichen Bearbeitungen und/oder sonstige ähnliche Informationen, insbesondere durchgeführte Instandhaltungen, als Statusinformationen (S) von den Bearbeitungseinrichtungen (3) bzw. deren Maschinensteuerung (20) insbesondere an eine Systemsteuerung (21) übermittelt werden.

7. Verfahren nach einem der voranstehenden Ansprüche, **dadurch gekennzeichnet, dass** die Bearbeitungseinrichtungen (3) bzw. deren Maschinensteuerungen (20) Auftragsinformationen (A) sowie Informationen zum Status, insbesondere Auftragsstatus, Anfragen und/oder Anforderungen austauschen.

8. System (1) zur Bearbeitung optischer Linsen (2),
mit mehreren Bearbeitungseinrichtungen (3) und einer Systemsteuerung (21),
wobei die Systemsteuerung (21) oder eine Bearbeitungslinie (B) zur Zuordnung (Z) von Linsen (2) jeweils zu einer Bearbeitungseinrichtung (3) zumindest für die nächste Bearbeitung ausgebildet ist,
**dadurch gekennzeichnet,**
**dass** die Systemsteuerung (21) für eine zentrale Verwaltung von Anweisungen zur Instandhaltung der einzelnen Bearbeitungseinrichtungen (3) ausgebildet ist, wobei die jeweiligen Anweisungen dezentral an der jeweiligen Bearbeitungseinrichtung (3) ausgebbar sind.

9. System nach Anspruch 8, **dadurch gekennzeichnet, dass** die Anweisungen über einen Bildschirm oder ein Bedienpult (17) der jeweiligen Bearbeitungseinrichtung (3) oder über einen mobilen Bildschirm oder mobilen Computer, wie ein Smartphone oder ein Laptop, ausgebbar sind.

10. System nach Anspruch 8 oder 9, **dadurch gekennzeichnet**, die Systemsteuerung (21) selbsttätig steuert, welche Anweisungen unter Berücksichtigung der jeweiligen Bearbeitungseinrichtung (3) und der geplanten oder erforderlichen Instandhaltung ausgegeben werden bzw. anzeigbar sind.

11. System nach einem der Ansprüche 8 bis 10, **dadurch gekennzeichnet, dass** die Systemsteuerung (21) zur zentralen Verwaltung von Materialien für die Instandhaltungen, wie Betriebsmitteln, Werkzeugen und/oder Ersatzteilen, ausgebildet ist.

12. System nach Anspruch 11, **dadurch gekennzeichnet, dass** die Systemsteuerung (21) derart ausgebildet ist, dass die Instandhaltungen in Abhängigkeit von der Verfügbarkeit der erforderlichen Materialien planbar oder festlegbar sind und/oder dass die für anstehende oder zu erwartende Instandhaltungen erforderlichen Materialien anforderbar sind.

13. System nach einem der Ansprüche 8 bis 12, **dadurch gekennzeichnet, dass** die Bearbeitungseinrichtungen (3) bzw. deren Maschinensteuerung (20) dazu ausgebildet sind, den Status der Bearbeitungseinrichtungen (3), insbesondere den Bearbeitungsstatus bzw. Produktionsstatus, die Verfügbarkeit der jeweiligen Bearbeitungseinrichtung (3), die Befähigung bzw. Werkzeugausstattung, die möglichen Bearbeitungen und/oder sonstige ähnliche Informationen, insbesondere durchgeführte Instandhaltungen, als Statusinformationen (S) von den Bearbeitungseinrichtungen (3) bzw. deren Maschinensteuerung (20) insbesondere an die Systemsteuerung (21) zu übermitteln.

14. System nach einem der Ansprüche 8 bis 13, **dadurch gekennzeichnet, dass** die Bearbeitungseinrichtungen (3) bzw. deren Maschinensteuerungen (20) Auftragsinformationen (A) sowie Informationen zum Status, insbesondere Auftragsstatus, Anfragen und/oder Anforderungen austauschen können.

15. System nach einem der Ansprüche 8 bis 14, **dadurch gekennzeichnet, dass** das System (1) auf mehrere Standorte verteilt ist.

## Claims

1. Method for processing optical lenses (2), wherein the lenses (2) are selectively processed by different processing apparatuses (3) corresponding to an assignment (Z),
**characterized**
**in that** a central management of instructions for maintenance of the individual processing apparatuses (3) is carried out, wherein the respective instructions are output and/or can be indicated at the respective processing apparatus (3) in a decentralized manner.

2. Method according to claim 1, **characterized in that** the outputting and/or indicating of the instructions is carried out via a screen or an operating console (17) of the respective processing apparatus (3) or via a mobile screen or mobile computer, such as a smartphone or a laptop.

3. Method according to claim 1 or 2, **characterized in that** a system control (21) automatically controls which instructions are output and/or can be indicated, taking into account the respective processing apparatus (3) and the planned or required maintenance.

4. Method according to one of the preceding claims, **characterized in that** a central management of maintenance intervals and/or maintenance measures is carried out.

5. Method according to one of the preceding claims, **characterized in that** a central management or ordering of materials for maintenance is carried out.

6. Method according to one of the preceding claims, **characterized in that** the status of the processing apparatuses (3), in particular the processing status and/or production status, the availability of the respective processing apparatus (3), the capabilities and/or tooling, the possible processing operations and/or other similar information, in particular maintenance that has been carried out, are forwarded as status information (S) from the processing apparatuses (3) or the machine control (20) thereof in particular to a system control (21).

7. Method according to one of the preceding claims, **characterized in that** the processing apparatuses (3) or the machine controls (20) thereof exchange job information (A), as well as information regarding status, in particular job status, queries and/or requests.

8. System (1) for processing optical lenses (2),
with multiple processing apparatuses (3) and a system control (21),
wherein the system control (21) or a processing line (B) is designed for assignment (Z) of lenses (2) to a processing apparatus (3), respectively, at least for the next processing,
**characterized**
**in that** the system control (21) is designed for a central management of instructions for maintenance of the individual processing apparatuses (3), wherein the respective instructions can be output in a decentralized manner at the respective processing apparatus (3).

9. System according to claim 8, **characterized in that** the instructions can be output via a screen or operating console (17) of the respective processing apparatus (3) or via a mobile screen or mobile computer, such as a smartphone or a laptop.

10. System according to claim 8 or 9, **characterized in that** the system control (21) automatically controls which instructions are output and/or can be indicated, taking into account the respective processing apparatus (3) and the planned or required maintenance.

11. System according to one of claims 8 to 10, **characterized in that** the system control (21) is designed for central management of materials for the maintenance, such as operating means, tools and/or replacement parts.

12. System according to claim 11, **characterized in that** the system control (21) is designed in such a way that the maintenance can be planned or scheduled based on the availability of the necessary materials and/or **in that** the materials necessary for maintenance that is due or to be expected can be requested.

13. System according to one of claims 8 to 12, **characterized in that** the processing apparatuses (3) or the machine control (20) thereof are designed to forward the status of the processing apparatuses (3), in particular the processing status and/or production status, the availability of the respective processing apparatus (3), the capabilities and/or tooling, the possible processing operations and/or other similar information, in particular maintenance that has been carried out, as status information (S) from the processing apparatuses (3) or the machine control (20) thereof in particular to the system control (21).

14. System according to one of claims 8 to 13, **characterized in that** the processing apparatuses (3) or the machine controls (20) thereof can exchange job information (A), as well as information regarding status, in particular job status, queries and/or requests.

15. System according to one of claims 8 to 14, **characterized in that** the system (1) is distributed to multiple sites.

## Revendications

1. Procédé de traitement de lentilles optiques (2), dans lequel les lentilles (2) sont traitées sélectivement par différents dispositifs de traitement (3) conformément à une affectation (Z),
**caractérisé**
**en ce qu'**une gestion centrale d'instructions pour la maintenance des différents dispositifs de traitement (3) est effectuée, les instructions respectives étant émises et/ou pouvant être affichées de manière décentralisée sur le dispositif de traitement (3) respectif.

2. Procédé selon la revendication 1, **caractérisé en ce que** la sortie et/ou l'affichage des instructions s'effectue par l'intermédiaire d'un écran ou d'un pupitre de commande (17) du dispositif de traitement respectif (3) ou par l'intermédiaire d'un écran mobile ou d'un ordinateur mobile, comme un smartphone ou un ordinateur portable.

3. Procédé selon la revendication 1 ou 2, **caractérisé en ce qu'**une commande de système (21) commande automatiquement quelles instructions sont émises et/ou peuvent être affichées en tenant compte du dispositif de traitement (3) respectif et de la maintenance planifiée ou nécessaire.

4. Procédé selon l'une des revendications précédentes, **caractérisé en ce qu'**une gestion centrale des intervalles de maintenance et/ou des mesures de maintenance est effectuée.

5. Procédé selon l'une des revendications précédentes, **caractérisé en ce qu'**une gestion ou une commande centrale de matériaux pour la maintenance est effectuée.

6. Procédé selon l'une des revendications précédentes, **caractérisé en ce que** l'état des dispositifs de traitement (3), en particulier l'état de traitement et/ou l'état de production, la disponibilité du dispositif de traitement (3) respectif, la capacité et/ou l'équipement en outils, les traitements possibles et/ou d'autres informations similaires, en particulier les maintenances effectuées, sont transmis en tant qu'informations d'état (S) par les dispositifs de traitement (3) ou leur commande de machine (20), en particulier à une commande de système (21).

7. Procédé selon l'une des revendications précédentes, **caractérisé en ce que** les dispositifs de traitement (3) ou leurs commandes de machine (20) échangent des informations de commande (A) ainsi que des informations sur l'état, en particulier l'état de la commande, des demandes et/ou des exigences.

8. Système (1) pour le traitement de lentilles optiques (2),
avec plusieurs dispositifs de traitement (3) et une commande de système (21),
la commande de système (21) ou une ligne de traitement (B) étant conçue pour l'affectation (Z) de lentilles (2) respectivement à un dispositif de traitement (3) au moins pour le traitement suivant,
**caractérisé**
**en ce que** la commande de système (21) est conçue pour une gestion centrale d'instructions pour la maintenance des différents dispositifs de traitement (3), les instructions respectives pouvant être émises de manière décentralisée sur le dispositif de traitement (3) respectif.

9. Système selon la revendication 8, **caractérisé en ce que** les instructions peuvent être émises par l'intermédiaire d'un écran ou d'un pupitre de commande (17) du dispositif de traitement (3) respectif ou par l'intermédiaire d'un écran mobile ou d'un ordinateur mobile, comme un smartphone ou un ordinateur portable.

10. Système selon la revendication 8 ou 9, **caractérisé en ce que** la commande de système (21) commande automatiquement quelles instructions sont émises et/ou peuvent être affichées en tenant compte du dispositif de traitement (3) respectif et de la maintenance planifiée ou nécessaire.

11. Système selon l'une des revendications 8 à 10, **caractérisé en ce que** la commande de système (21) est conçue pour la gestion centrale de matériaux pour les maintenances, tels que des moyens d'exploitation, des outils et/ou des pièces de rechange.

12. Système selon la revendication 11, **caractérisé en ce que** la commande de système (21) est conçue de telle sorte que les maintenances peuvent être planifiées ou fixées en fonction de la disponibilité des matériaux nécessaires et/ou que les matériaux nécessaires pour les maintenances en attente ou attendues peuvent être demandés.

13. Système selon l'une des revendications 8 à 12, **caractérisé en ce que** les dispositifs de traitement (3) ou leur commande de machine (20) sont conçus pour transmettre l'état des dispositifs de traitement (3), en particulier l'état de traitement et/ou l'état de production, la disponibilité du dispositif de traitement (3) respectif, la capacité et/ou l'équipement en outils, les traitements possibles et/ou d'autres informations similaires, en particulier les maintenances effectuées, en tant qu'informations d'état (S) des dispositifs de traitement (3) ou de leur commande de machine (20), en particulier à la commande de système (21).

14. Système selon l'une des revendications 8 à 13, **caractérisé en ce que** les dispositifs de traitement (3) ou leurs commandes de machine (20) peuvent échanger des informations de commande (A) ainsi que des informations sur l'état, en particulier l'état de la commande, des demandes et/ou des exigences.

15. Système selon l'une des revendications 8 à 14, **caractérisé en ce que** le système (1) est réparti sur plusieurs sites.
